# EUROPÄISCHE PATENTSCHRIFT

(11) **EP 3 365 735 B1**
(45) Veröffentlichungstag und Bekanntmachung des Hinweises auf die Patenterteilung: **27.11.2019**
(21) Anmeldenummer: 16782246.9
(22) Anmeldetag: 18.10.2016
(51) Int. Cl.: G05B 9/02

(54) **SICHERHEITSSENSOR ZUR ÜBERWACHUNG DER BETRIEBSSICHERHEIT EINER ANLAGE**
SAFETY SENSOR FOR MONITORING THE OPERATIONAL SAFETY OF A SYSTEM
CAPTEUR DE SÉCURITÉ POUR SURVEILLER LA SÉCURITÉ D'UNE INSTALLATION

(30) Priorität: 23.10.2015 DE 102015118151
(43) Veröffentlichungstag der Anmeldung: 29.08.2018
(73) Patentinhaber: Bernstein AG, 32457 Porta Westfalica (DE)
(72) Erfinder: SCHOLZ, Marcus, 32584 Löhne (DE); ZWIRKOWSKI, Georg, 31675 Bückeburg (DE); KRAUSE, Thomas, 32457 Porta Westfalica (DE)
(74) Vertreter: Gramm, Lins & Partner Patent- und Rechtsanwälte PartGmbB
(86) Internationale Anmeldenummer: PCT/EP2016/074960
(87) Internationale Veröffentlichungsnummer: WO 2017/067918

(56) Entgegenhaltungen:
- EP-A2- 2 637 067
- DE-A1-102004 020 997

## Beschreibung

Die Erfindung betrifft einen Sicherheitssensor zur Überwachung der Betriebssicherheit einer Anlage,
a) mit mindestens einem Sicherheitssignaleingang zum Empfang eines Eingangs-Sicherheitssignals, das einen ersten Signalzustand oder einen zweiten Signalzustand aufweisen kann,
b) mit mindestens einem Sicherheitssignalausgang zur Ausgabe eines Ausgangs-Sicherheitssignals, das den ersten Signalzustand oder den zweiten Signalzustand aufweisen kann,
c) mit einer Steuerungseinheit, die mit dem mindestens einen Sicherheitssignaleingang und dem mindestens einen Sicherheitssignalausgang verbunden ist und die dazu eingerichtet ist, einen Betriebszustand der Anlage, der ein sicherer oder ein unsicherer Betriebszustand sein kann, zu erkennen und an dem mindestens einen Sicherheitssignalausgang ein Ausgangs-Sicherheitssignal auszugeben, dessen Signalzustand den erkannten Betriebszustand signalisiert,
d) wobei der erste Signalzustand einen sicheren Betriebszustand der Anlage signalisiert und durch einen Signalwert aus einem ersten, dem ersten Signalzustand zugeordneten Wertebereich repräsentiert wird und der zweite Signalzustand einen unsicheren Betriebszustand der Anlage signalisiert und durch einen Signalwert aus einem zweiten, dem zweiten Signalzustand zugeordneten Wertebereich repräsentiert wird, der vom ersten Wertebereich verschieden ist.

Sicherheitssensoren oder -schalter haben eine weite Verbreitung auf dem Gebiet der Sicherheitstechnik gefunden, um die Betriebssicherheit technischer Anlagen zu überwachen und die von solchen Anlagen ausgehenden Gefahren für den Menschen zu minimieren. So ist es aus dem Stand der Technik beispielsweise bekannt, dass Sicherheitssensoren dazu verwendet werden, den Schließzustand von Zugangstüren, die Unterbrechung von Lichtgittern, die Füllhöhe von Flüssigkeiten und viele weitere Formen des Betriebszustandes technischer Anlagen zu überwachen und anzuzeigen. Als zu überwachende Anlagen kommen dabei grundsätzlich sämtliche Arten technischer Anlagen in Betracht, beispielsweise eine einzelne Fertigungsmaschine oder eine ganze Fertigungslinie, aber auch etwa eine Aufzuganlage oder eine sonstige technische Anlage.

Ein derartiger Sicherheitsschalter bzw. -sensor ist beispielsweise aus der DE 10 2012 107 717 B3, DE 10 2004 020 997 A1 oder EP 2 637 067 A2 bekannt.

Um die genannten Aufgaben eines Sicherheitssensors erfüllen zu können, weist der erfindungsgemäße Sicherheitssensor eine Steuerungseinheit auf, die dazu eingerichtet ist, den Betriebszustand der zu überwachenden Anlage zu erkennen und dabei mindestens zwischen einem unsicheren und einem sicheren Betriebszustand zu unterscheiden.

Der Sicherheitssensor ist dazu eingerichtet, in Abhängigkeit des erkannten Betriebszustands der Anlage einen aktivierten oder einen deaktivierten Sensorzustand einzunehmen. Ein aktivierter Sensorzustand des Sicherheitssensors wird eingenommen, wenn der Sicherheitssensor einen sicheren Betriebszustand der Anlage erkannt hat. Ein deaktivierter Sensorzustand des Sicherheitssensors wird eingenommen, wenn der Sicherheitssensor einen unsicheren Betriebszustand der Anlage erkannt hat.

Die Erkennung des Betriebszustandes der Anlage kann dabei unter Zuhilfenahme eines externen Sicherheitsgebers erfolgen, der über eine Verbindungsleitung mit einem Sicherheitssignaleingang des Sicherheitssensors verbunden wird. Ein solcher externer Sicherheitsgeber kann beispielsweise eine Lichtschranke, ein Lichtgitter, ein Betätiger eines berührungslosen Sicherheitsschalters, der beispielsweise an eine zu überwachende Zugangstür angebracht wird, ein Not-Aus-Schalter oder ein sonstiger Sicherheitsgeber sein, welcher der Erfassung des Betriebszustandes einer Anlage dient. Die Funktionalität eines solchen Sicherheitsgebers kann aber auch in den Sicherheitssensor integriert sein, sodass der Sicherheitssensor in der Lage ist, ohne einen externen Sicherheitsgeber den Betriebszustand der Anlage zu erkennen. Darüber hinaus ist es möglich, dass die Steuerungseinheit des Sicherheitssensors den Betriebszustand der Anlage anhand eines an einem Sicherheitssignaleingang des Sicherheitssensors empfangenen Eingangs-Sicherheitssignals erkennt, das von einem anderen Sicherheitssensor ausgegeben wurde.

Auf dieser Grundlage ist es der Steuerungseinheit möglich, an dem mindestens einen Sicherheitssignalausgang des Sicherheitssensors ein Ausgangs-Sicherheitssignal auszugeben, dessen Signalzustand den erkannten Betriebszustand der Anlage - und damit zugleich den Sensorzustand - signalisiert.

Aus dem Stand der Technik ist es dabei bekannt, dass ein erster Signalzustand, der einen sicheren Betriebszustand der Anlage signalisiert, durch einen Signalwert aus einem ersten Wertebereich repräsentiert wird und der zweite Signalzustand, der einen unsicheren Betriebszustand der Anlage signalisiert, durch einen Signalwert aus einem zweiten Wertebereich repräsentiert wird, der vom ersten Wertebereich verschieden ist.

In der Praxis der Sicherheitstechnik ist es in vielen Fällen erstrebenswert, dass Sicherheitssensoren neben der bloßen Signalisierung eines sicheren oder unsicheren Betriebszustandes der Anlage zusätzliche Daten zur Verfügung stellen.

Hierzu sind aus dem Stand der Technik zwei verschiedene Ansätze bekannt. So ist es zum einen bekannt, von jedem Sicherheitssensor eine dedizierte Diagnoseleitung zu einer Auswertungseinheit zu verlegen, sodass über die dedizierte Diagnoseleitung der Sensorzustand des Sicherheitssensors übermittelt und dem jeweiligen Sicherheitssensor eindeutig zugeordnet werden kann. Darüber hinaus ist es bekannt, Sicherheitssensoren zu verwenden, die über eine Busschnittstelle verfügen, um an einen Datenbus angeschlossen zu werden und über diesen Datenbus zusätzliche Daten an eine ebenfalls an den Datenbus angeschlossene Steuerungseinheit zu übermitteln.

Die beiden genannten Lösungsansätze sind allerdings mit signifikanten Nachteilen verbunden. Der Einsatz dedizierter Diagnoseleitungen bringt den Nachteil mit sich, dass eine zusätzliche und aufwändige Verdrahtung notwendig ist. Die Kommunikation über einen Datenbus bringt den Nachteil mit sich, dass sämtliche an dem Datenbus angeschlossenen Geräte mit einer zusätzlichen Bus-Schnittstelle ausgerüstet werden müssen, wodurch erhebliche zusätzliche Kosten entstehen und eine Rückwärtskompatibilität mit herkömmlichen Geräten ausgeschlossen wird.

Ausgehend hiervon ist es Aufgabe der vorliegenden Erfindung, bei einem Sicherheitssensor der eingangs genannten Art eine Möglichkeit zur Übermittlung zusätzlicher Daten, insbesondere von Diagnose- und/oder Steuerdaten zu schaffen, ohne die oben genannten Nachteile der aus dem Stand der Technik bekannten Lösungen in Kauf nehmen zu müssen.

Die Aufgabe wird durch einen Sicherheitssensor zur Überwachung der Betriebssicherheit einer Anlage mit den Merkmalen des Anspruchs 1 gelöst.

Es wird vorgeschlagen, dass
e) die Steuerungseinheit dazu eingerichtet ist, dem ausgegebenen Ausgangs-Sicherheitssignal zusätzliche Daten aufzuprägen, indem in Abhängigkeit der zusätzlichen Daten der Signalwert des ausgegebenen Ausgangs-Sicherheitssignals innerhalb der Grenzen des Wertebereichs, der dem gegenwärtig ausgegebenen Signalzustand des Ausgangs-Sicherheitssignals zugeordnet ist, verändert wird,
   und/oder
f) die Steuerungseinheit dazu eingerichtet ist, dem empfangenen Eingangs-Sicherheitssignal zusätzliche Daten aufzuprägen, indem in Abhängigkeit der zusätzlichen Daten der Signalwert des empfangenen Eingangs-Sicherheitssignals innerhalb der Grenzen des Wertebereichs, der dem gegenwärtig empfangenen Signalzustand des Eingangs-Sicherheitssignals zugeordnet ist, verändert wird.

Zusätzliche Daten im Sinne der vorliegenden Erfindung können insbesondere Diagnosedaten und/oder Steuerdaten sein. Insbesondere ist es in vielen Fällen erstrebenswert, dass der Sicherheitssensor Diagnosedaten zur Verfügung stellt, die eine Diagnose der Ursache für die Erkennung eines unsicheren Betriebszustands der Anlage erleichtern.

Solche Diagnosedaten sind insbesondere dann von Interesse, wenn mehrere Sicherheitssensoren durch eine Reihenschaltung kaskadiert werden und auf diese Weise eine Sicherheitssensorenkette bilden. Zu diesem Zweck kann jeweils der mindestens eine Sicherheitssignalausgang eines Sicherheitssensors über eine Verbindungsleitung mit dem mindestens einen Sicherheitssignaleingang eines anderen Sicherheitssensors verbunden und auf diese Weise die im Rahmen der Installation notwendige Verdrahtung der Sicherheitssensoren vereinfacht werden. Auf diesen Aspekt der Erfindung wird später noch näher eingegangen.

Der Signalwert des Sicherheitssignals, dem die zusätzlichen Daten aufgeprägt werden, kann grundsätzlich der Wert einer beliebigen physikalischen Größe sein, die sich zur Darstellung eines Signals eignet. Der Signalwert kann insbesondere beispielsweise der Wert einer elektrischen Spannung oder eines elektrischen Stroms sein.

In diesem Zusammenhang ist es vorteilhaft möglich, einen Signalzustand durch einen unteren Schwellenwert und einen oberen Schwellenwert zu definieren, wobei die Schwellenwerte die Grenzen des Wertebereichs bilden, der dem Signalzustand zugeordnet ist. Auf diese Weise kann z.B. als erster Signalzustand ein Signalzustand HIGH definiert werden, der durch einen ersten Wertebereich repräsentiert wird, und ein zweiter Signalzustand LOW definiert werden, der durch einen zweiten Wertebereich repräsentiert wird, wobei die Signalwerte des ersten Wertebereichs ausnahmslos größer sind als die Signalwerte des zweiten Wertebereichs, d.h. die Wertebereiche voneinander verschieden sind.

Erfindungsgemäß ist nun vorgesehen, dass die Steuerungseinheit dem ausgegebenen Ausgangs-Sicherheitssignal zusätzliche Daten aufprägen kann, indem der Signalwert des ausgegebenen Ausgangs-Sicherheitssignals innerhalb der Grenzen des Wertebereichs verändert wird, der dem gegenwärtig ausgegebenen Signalzustand zugeordnet ist. Wird beispielsweise gegenwärtig ein Ausgangs-Sicherheitssignal ausgegeben, das den zweiten Signalzustand aufweist, da die Steuerungseinheit des Sicherheitssensors einen unsicheren Betriebszustand der Anlage erkannt hat, so wird in Abhängigkeit der zusätzlichen Daten der Signalwert des Ausgangs-Sicherheitssignals verändert, ohne dass der obere Schwellenwert des dem zweiten Signalzustand zugeordneten Wertebereichs überschritten oder der untere Schwellenwert dieses Wertebereichs unterschritten wird. Im oben genannten Beispiel einer elektrischen Spannung kann der Wertebereich des zweiten Signalzustands beispielsweise ein Wertebereich von -3 V bis +2 V sein, sodass in diesem Fall der Signalwert innerhalb des Wertebereichs zwischen -3 V und +2 V verändert wird, um dem Ausgangs-Sicherheitssignal die zusätzlichen Daten aufzuprägen.

Auf diese Weise können dem ausgegebenen Ausgangs-Sicherheitssignal zusätzliche Daten aufgeprägt werden, ohne dass sich der durch das Ausgangs-Sicherheitssignal signalisierte Betriebszustand verändert. Eine an den Sicherheitssignalausgang des Sicherheitssensors angeschlossene Einheit, z.B. ein in Reihe geschalteter weiterer Sicherheitssensor, eine Auswertungseinheit, eine Anzeigeeinheit und/oder eine Schalteinrichtung, erkennt somit anhand des von dem Sicherheitssensor ausgegebenen Ausgangs-Sicherheitssignals den von dem Sicherheitssensor erkannten Betriebszustand der Anlage, im oben genannten Beispiel also einen unsicheren Betriebszustand, der durch den zweiten Signalzustand signalisiert wird. Darüber hinaus kann die an den Sicherheitssignalausgang angeschlossene Einheit dem von dem Sicherheitssensor ausgegebenen Ausgangs-Sicherheitssignal die ihm aufgeprägten zusätzlichen Daten, z.B. Diagnosedaten und/oder Steuerdaten, entnehmen.

In analoger Weise ist es erfindungsgemäß möglich, dass einem gegenwärtig ausgegebenen Ausgangs-Sicherheitssignal des ersten Signalzustands, weleher einen sicheren Betriebszustand der Anlage signalisiert, zusätzliche Daten aufgeprägt werden, indem der Signalwert des Ausgangs-Sicherheitssignals innerhalb der Grenzen des dem ersten Signalzustand zugeordneten Wertebereichs verändert wird.

Alternativ oder ergänzend hierzu ist erfindungsgemäß vorgesehen, dass die Steuerungseinheit dazu eingerichtet, dem empfangenen Eingangs-Sicherheitssignal zusätzliche Daten aufzuprägen. Das Aufbringen der Daten erfolgt dabei dadurch, dass der Signalwert des empfangenen Eingangs-Sicherheitssignals innerhalb der Grenzen des seinem gegenwärtigen Signalzustand zugeordneten Wertebereichs verändert wird.

Empfängt der Sicherheitssensor beispielsweise an seinem Sicherheitssignaleingang gegenwärtig ein Eingangs-Sicherheitssignal, das den zweiten Signalzustand aufweist, der einen unsicheren Betriebszustand der Anlage signalisiert, so prägt die Steuerungseinheit dem empfangenen Eingangs-Sicherheitssignal die zusätzlichen Daten auf, indem der Signalwert des Eingangs-Sicherheitssignals innerhalb der Grenzen des dem zweiten Signalzustand zugeordneten Wertebereichs verändert wird. Die für das Aufprägen zusätzlicher Daten auf das empfangene Eingangs-Sicherheitssignal verwendete Methodik entspricht im Übrigen der für das Ausgangs-Sicherheitssignal verwendeten Methodik, sodass die obigen Ausführungen zum Aufprägen zusätzlicher Daten auf das Ausgangs-Sicherheitssignal in analoger Weise gelten.

Der mindestens eine Sicherheitssignaleingang des Sicherheitssensors wird somit zugleich als Eingang für das empfangene Eingangs-Sicherheitssignal und als Ausgang für die Ausgabe zusätzlicher Daten genutzt, indem dem an dem Sicherheitssignaleingang empfangenen Eingangs-Sicherheitssignal zusätzliche Daten aufgeprägt werden.

Mit dem erfindungsgemäßen Sicherheitssensor mit den Merkmalen des Anspruchs 1 wird in vorteilhafter Weise eine Möglichkeit geschaffen, über die bloße Signalisierung des Betriebszustandes der zu überwachenden Anlage hinaus zusätzliche Daten, z.B. Diagnose- oder Steuerdaten zu übermitteln, ohne hierfür eine dedizierte Diagnoseleitung oder eine Datenbus-Schnittstelle an dem Sicherheitssensor vorsehen zu müssen. Erfindungsgemäß können in vorteilhafter Weise der ohnehin vorhandene mindestens eine Sicherheitssignalausgang sowie der ohnehin vorhandene mindestens eine Sicherheitssignaleingang des Sicherheitssensors für die Übermittlung der zusätzlichen Daten verwendet werden.

Dadurch werden zum einen der Implementierungsaufwand für einen solchen Sicherheitssensor und die damit verbundenen Kosten erheblich verringert, da der Sicherheitssensor nicht mit einer zusätzlichen Schnittstelle für die Übermittlung der zusätzlichen Daten ausgerüstet werden muss. Darüber hinaus werden auch der mit der Installation eines solchen Sicherheitssensors verbundene Installationsaufwand und die daraus resultierenden Kosten erheblich verringert, da keine dedizierten Verbindungsleitungen für die Übertragung der zusätzlichen Daten notwendig sind, sondern die ohnehin vorhandenen Verbindungsleitungen, die für die Übertragung der den Betriebszustand der Anlage anzeigenden Sicherheitssignale genutzt werden, verwendet werden können.

Auch ist es denkbar, zur Übermittlung der zusätzlichen Daten in vorteilhafter Weise auf die Funktionalität einer in einem herkömmlichen Sicherheitssensor ohnehin vorhandenen Steuerungseinheit zurückzugreifen. Dadurch wird eine kostengünstige Implementierung eines erfindungsgemäßen Sicherheitssensors ermöglicht.

Des Weiteren bietet der erfindungsgemäße Sicherheitssensor mit den Merkmalen des Anspruchs 1 den Vorteil, dass eine Kompatibilität mit herkömmlichen Sicherheitssensoren gewährleistet werden kann. Solche herkömmlichen Sicherheitssensoren sind zwar zum Empfang und/oder zur Ausgabe von Sicherheitssignalen eingerichtet, die durch einen ersten und einen zweiten Signalzustand des Sicherheitssignals den erkannten Betriebszustand einer zu überwachenden Anlage signalisieren, sie sind aber nicht zur Ausgabe oder zum Empfang zusätzlicher, auf das Sicherheitssignal aufgeprägter Daten eingerichtet.

Sendet ein solcher herkömmlicher Sicherheitssensor ein Sicherheitssignal an den Sicherheitssignaleingang eines erfindungsgemäßen Sicherheitssensors mit den Merkmalen des Anspruchs 1, so ist der erfindungsgemäße Sicherheitssensor in der Lage, anhand des Signalzustands des empfangenen Sicherheitssignals den von dem herkömmlichen Sicherheitssensor signalisierten Betriebszustand der Anlage zu erkennen. Umgekehrt ist ein herkömmlicher Sicherheitssensor, an dessen Sicherheitssignaleingang ein erfindungsgemäßer Sicherheitssensor mit den Merkmalen des Anspruchs 1 ein Sicherheitssignal sendet, das dem Sicherheitssignal aufgeprägte zusätzliche Daten enthält, ohne Weiteres in der Lage, anhand des Signalzustands des empfangenen Sicherheitssignals den von dem erfindungsgemäßen Sicherheitssensor erkannten Betriebszustand der Anlage zu erkennen.

Durch die auf diese Weise gewährleistete Kompatibilität des erfindungsgemäßen Sicherheitssensors mit herkömmlichen Sicherheitssensoren können weitere Kosteneinsparungen bei der Installation eines auf Sicherheitssensoren basierenden Überwachungssystems erzielt werden.

In vorteilhafter Weise kann der erfindungsgemäße Sicherheitssensor mindestens zwei Sicherheitssignalausgänge aufweisen, an denen in redundanter Form dasselbe Ausgangs-Sicherheitssignal ausgegeben wird. Auf diese Weise wird die Zuverlässigkeit des Sicherheitssensors für den Fall erhöht, dass einer der Sicherheitssignalausgänge nicht ordnungsgemäß funktioniert und daher nicht den dem erkannten Betriebszustand der Anlage entsprechenden Signalzustand des Ausgangs-Sicherheitssignals ausgibt.

In entsprechender Weise kann der erfindungsgemäße Sicherheitssensor mindestens zwei Sicherheitssignaleingänge aufweisen, um das in redundanter Form ausgegebene Sicherheitssignal eines anderen Sicherheitssensors und/oder eines externen Sicherheitsgebers zu empfangen. In vorteilhafter Weise kann der Sicherheitssensor in diesem Fall dazu eingerichtet sein, einen unsicheren Betriebszustand der Anlage bereits zu erkennen und demzufolge einen deaktivierten Sensorzustand einzunehmen, wenn an mindestens einem der mindestens zwei Sicherheitssignaleingänge ein Eingangs-Sicherheitssignal empfangen wird, das den zweiten, einen unsicheren Betriebszustand der Anlage signalisierenden Signalzustand aufweist.

Das von dem Sicherheitssensor ausgegebene Sicherheitssignal kann außerdem Testimpulse zur Querschluss-, Kurzschluss-, Masseschluss- und/oder Erdschlusserkennung enthalten. Dabei wird für sehr kurze Zeit der von dem Sicherheitssensor an einem Sicherheitssignalausgang ausgegebene Signalzustand gewechselt, um überprüfen zu können, ob an diesem Sicherheitssignalausgang beide Signalzustände korrekt ausgegeben werden, d. h. ob sich an dem Sicherheitssignalausgang ein Signalwert innerhalb des jeweiligen zugeordneten Wertebereichs einstellt. Auf diese Weise kann ein Querschluss, Kurzschluss, Masseschluss und/oder Erdschluss erkannt werden.

Der erfindungsgemäße Sicherheitssensor kann sowohl als Einzelgerät als auch in kaskadierter Form als Teil einer Sicherheitssensorenkette, die in Reihe geschaltete Sicherheitssensoren umfasst, eingesetzt werden.

Gemäß einer vorteilhaften Weiterbildung der Erfindung ist daher vorgesehen, dass der mindestens eine Sicherheitssignalausgang mit mindestens einem Sicherheitssignaleingang eines anderen Sicherheitssensors zur Signalübertragung verbindbar ist und/oder der mindestens eine Sicherheitssignaleingang mit mindestens einem Sicherheitssignalausgang eines anderen Sicherheitssensors zur Signalübertragung verbindbar ist, um mehrere Sicherheitssensoren durch eine Reihenschaltung zu einer Sicherheitssensorenkette zu kaskadieren.

Dadurch kann der erfindungsgemäße Sicherheitssensor in vorteilhafter Weise mit anderen erfindungsgemäßen oder herkömmlichen Sicherheitssensoren in Reihe geschaltet werden, indem z.B. jeweils ein Sicherheitssignalausgang mit einem Sicherheitssignaleingang über eine Verbindungsleitung verbunden wird, um eine aus kaskadierten Sicherheitssensoren bestehende Sicherheitssensorenkette zu schaffen. Da in der Praxis der Sicherheitstechnik häufig eine Mehrzahl von Sicherheitssensoren zur Überwachung der Betriebssicherheit einer Anlage eingesetzt wird, ist eine solche Reihenschaltung mit dem Vorteil verbunden, dass die komplexe Auswertung und die notwendige Verdrahtung der eingesetzten Sicherheitssensoren für den Hersteller und/oder den Betreiber der zu überwachenden Anlage signifikant vereinfacht wird.

Vorteilhaft kann in diesem Zusammenhang die Steuerungseinheit des Sicherheitssensors dazu eingerichtet sein, ein Sicherheitssignal, das den zweiten Signalzustand aufweist, weiterzuleiten, indem die Steuerungseinheit dazu eingerichtet ist, an dem mindestens einen Sicherheitssignalausgang des Sicherheitssensors ein Ausgangs-Sicherheitssignal auszugeben, das den zweiten Signalzustand aufweist, wenn an mindestens einem Sicherheitssignaleingang des Sicherheitssensors ein Eingangs-Sicherheitssignal empfangen wird, das den zweiten Signalzustand aufweist.

Demnach nimmt jeder der Sicherheitssensoren, die zur einer Sicherheitssensorenkette kaskadiert worden sind, einen deaktivierten Sensorzustand ein, sobald an mindestens einem Sicherheitssignaleingang ein Eingangs-Sicherheitssignal des zweiten Signalzustands, der einen unsicheren Betriebszustand der Anlage signalisiert, empfangen wird, und gibt demzufolge an seinem Sicherheitssignalausgang ebenfalls ein Ausgangs-Sicherheitssignal aus, das einen unsicheren Betriebszustand der Anlage signalisiert. Dadurch kann die Information über einen unsicheren Zustand der Anlage entlang der Sicherheitssensorenkette weitergeleitet werden.

Durch diese Methodik wird eine Sicherheitssensorenkette geschaffen, die am Ausgang des letzten Sicherheitssensors der Sicherheitssensorenkette nur dann einen sicheren Betriebszustand der Anlage anzeigt, wenn sämtliche in Reihe geschalteten Sicherheitssensoren einen aktivierten Zustand aufweisen, d.h. einen sicheren Betriebszustand der Anlage erkannt haben. Dadurch können geeignete Maßnahmen zur Vermeidung einer Gefährdung, z. B. eine Abschaltung der Anlage, eingeleitet werden, sobald mindestens einer der in Reihe geschalteten Sicherheitssensoren einen unsicheren Zustand der Anlage erkennt. Vorteilhaft kann eine Inbetriebnahme der Anlage in einem solchen Fall nur dann zugelassen werden, wenn sämtliche in Reihe geschalteten Sicherheitssensoren einen sicheren Betriebszustand der Anlage erkannt haben. Dadurch werden vorteilhaft die Zuverlässigkeit der Überwachung und die Sicherheit der Anlage erhöht.

Werden für eine solche Reihenschaltung aus dem Stand der Technik bekannte herkömmliche Sicherheitssensoren verwendet, so tritt das Problem auf, dass im Falle eines deaktivierten Sensorzustands des letzten Sicherheitssensors in der Sicherheitssensorenkette anhand des Sicherheitssignals, das dieser letzte Sicherheitssensor der Sicherheitssensorenkette ausgibt, nicht erkennbar ist, welcher der in Reihe geschalteten Sicherheitssensoren die Deaktivierung des Sensorzustands ausgelöst hat, d.h. welcher der Sicherheitssensoren den unsicheren Betriebszustand der Anlage originär erkannt hat. Insbesondere können auch mehrere in Reihe geschaltete Sicherheitssensoren unabhängig voneinander einen unsicheren Zustand der Anlage erkannt haben, z.B. wenn mehrere Schutztüren geöffnet wurden.

Eine Diagnose der Ursache des unsicheren Zustandes der Anlage erfordert in einem solchen Fall eine aufwändige manuelle Inspektion sämtlicher Teile der Anlage, die als Ursache für die Erkennung des unsicheren Betriebszustands der Anlage in Frage kommen. Erschwerend kommt in vielen Fällen hinzu, dass die in Betracht kommenden Teile der Anlage und/oder die daran angeschlossenen Sicherheitssensoren nur schwer zugänglich sind.

Mit dem erfindungsgemäßen Sicherheitssensor hingegen können in vorteilhafter Weise über die bloße Signalisierung des Betriebszustandes der zu überwachenden Anlage hinaus als zusätzliche Daten z.B. Diagnosedaten übermittelt werden, die eine schnelle und einfache Diagnose der Ursache für die Erkennung eines unsicheren Betriebszustands der Anlage ermöglichen.

In einer weiteren vorteilhaften Weiterbildung der Erfindung ist vorgesehen, dass die Steuerungseinheit dazu eingerichtet ist, dem Eingangs-Sicherheitssignal aufgeprägte zusätzliche Daten aus dem Eingangs-Sicherheitssignal zu dekodieren und/oder dem Ausgangs-Sicherheitssignal aufgeprägte zusätzliche Daten aus dem Ausgangs-Sicherheitssignal zu dekodieren.

Die Steuerungseinheit ist somit dazu eingerichtet, fremdaufgeprägte zusätzliche Daten aus dem Sicherheitssignal zu dekodieren. Fremdaufgeprägte zusätzliche Daten sind zusätzliche Daten, z.B. Diagnosedaten und/oder Steuerdaten, die ein anderer als der dekodierende Sicherheitssensor oder eine anderes Vorrichtung dem Sicherheitssignal aufgeprägt hat.

Der Sicherheitssensor wird dadurch in die Lage versetzt, fremdaufgeprägte zusätzliche Daten, die dem an den Sicherheitssignaleingang des Sicherheitssensors gesendeten Sicherheitssignal aufgeprägt sind, zu empfangen. Diese empfangenen zusätzlichen Daten können durch den empfangenden Sicherheitssensor ausgewertet, angezeigt und/oder weitergeleitet werden.

Des Weiteren wird der Sicherheitssensor in die Lage versetzt, fremdaufgeprägte zusätzliche Daten, z.B. Diagnosedaten und/oder Steuerdaten, die dem am Sicherheitssignalausgang dieses Sicherheitssensors anliegenden Sicherheitssignal aufgeprägt sind, zu empfangen. Der Sicherheitssignalausgang des erfindungsgemäßen Sicherheitssensors kann auf diese Weise sowohl als Ausgang zur Ausgabe eines Ausgangs-Sicherheitssignals als auch als Eingang zum Empfang zusätzlicher Daten verwendet werden. Die empfangenen zusätzlichen Daten, die aus dem Ausgangs-Sicherheitssignal dekodiert wurden, können von dem Sicherheitssensor ausgewertet, angezeigt und/oder weitergeleitet werden.

Auf diese Weise wird eine bidirektionale Kommunikation zwischen den Sicherheitssensoren in einer Sicherheitssensorenkette und/oder anderen damit verbundenen Geräten ermöglicht. So können beispielsweise von den Sicherheitssensoren über die Sicherheitssensorenkette Diagnosedaten zur Verfügung gestellt werden oder an die Sicherheitssensoren über die Sicherheitssensorenkette Steuerdaten gesendet werden.

In einer weiteren vorteilhaften Weiterbildung des erfindungsgemäßen Sicherheitssensors ist vorgesehen, dass die zusätzlichen Daten Diagnosedaten umfassen, die eine Kennung des Sicherheitssensors, eine Position des Sicherheitssensors, den durch den Sicherheitssensor erkannten Betriebszustand der Anlage, die Art und/oder Ursache eines erkannten unsicheren Betriebszustands und/oder sonstige Diagnoseinformationen betreffen.

Es wird somit vorgeschlagen, dass dem ausgegebenen Ausgangs-Sicherheitssignal und/oder dem empfangenen Eingangs-Sicherheitssignal zusätzliche Daten aufgeprägt werden, die Diagnosedaten umfassen. Dies hat den Vorteil, dass von einem Sicherheitssensor an einen anderen Sicherheitssensor und/oder ein anderes an dem Sicherheitssensor angeschlossenes Gerät Diagnosedaten übermittelt werden können, die beispielsweise die Diagnose der Ursache für das Erkennen eines unsicheren Betriebszustands der Anlage erleichtern und beschleunigen. So ist es beispielsweise möglich, dass ein erfindungsgemäßer Sicherheitssensor über die Sicherheitssensorenkette oder direkt an eine mit dem Sicherheitssensor verbundene Auswertungseinheit Diagnosedaten übermittelt.

Diese Diagnosedaten können beispielsweise eine Kennung des Sicherheitssensors in Verbindung mit einer Information über den durch den Sicherheitssensor erkannten Betriebszustand der Anlage beinhalten. Dadurch ist es einer direkt oder indirekt mit dem Sicherheitssensor verbundenen Auswertungseinheit möglich, anhand der dem Sicherheitssignal aufgeprägten zusätzlichen Daten zu erkennen, welcher der mit der Auswertungseinheit verbundenen Sicherheitssensoren originär einen unsicheren Betriebszustand der Anlage erkannt hat. Dadurch wird die Diagnose der Ursache des unsicheren Betriebszustands der Anlage signifikant vereinfacht und beschleunigt.

Des Weiteren können die Diagnosedaten auch Informationen zur Position des Sicherheitssensors enthalten. Eine solche Position des Sicherheitssensors kann beispielsweise eine geographische Position des Sicherheitssensors, eine relative Position des Sicherheitssensors innerhalb der Sicherheitssensorenkette und/oder eine sonstige Positionsinformation sein. Wird eine solche Positionsinformation in Verbindung mit dem durch den Sicherheitssensor erkannten Betriebszustand der Anlage durch den Sicherheitssensor zur Verfügung gestellt, so kann die Diagnose der Ursache eines erkannten unsicheren Zustands der Anlage ebenfalls signifikant vereinfacht und beschleunigt werden.

Des Weiteren können die Diagnosedaten Informationen zur Art und/oder Ursache eines erkannten unsicheren Betriebszustands beinhalten. Beispielsweise ist denkbar, dass ein Sicherheitssensor, der mit mehreren externen Sicherheitsgebern verbunden ist, auf diese Weise signalisiert, welcher der Sicherheitsgeber für das Erkennen eines unsicheren Betriebszustand der Anlage verantwortlich ist, oder es kann beispielsweise die Position einer Lichtgitterunterbrechung innerhalb eines Lichtgitters signalisiert werden.

In einer weiteren vorteilhaften Weiterbildung der Erfindung ist vorgesehen, dass die zusätzlichen Daten Steuerdaten umfassen, die der Parametrierung und/oder der Fernsteuerung eines Sicherheitssensors, eines Aktors, einer Auswertungseinheit und/oder einer sonstigen mit dem Sicherheitssensor verbundenen Vorrichtung dienen.

Dadurch ist es in vorteilhafter Weise möglich, den Sicherheitssensor oder ein mit ihm direkt oder indirekt verbundenes sonstiges Gerät, wie beispielsweise einen Aktor oder eine Auswertungseinheit, aus der Ferne zu parametrieren oder fernzusteuern. So können beispielsweise von einer an die Sicherheitssensorenkette angeschlossenen Auswertungseinheit Steuerdaten an einen Sicherheitssensor gesendet werden, um den Sicherheitssensor zu parametrieren. Eine solche Parametrierung kann beispielsweise die Kennung des Sicherheitssensors, seine Position innerhalb der Sicherheitssensorenkette, die Art der von ihm zur Verfügung zu stellenden zusätzlichen Daten und/oder sonstige Parameter betreffen. In ähnlicher Weise können durch die Steuerdaten ein Aktor oder die Auswertungseinheit parametriert und/oder ferngesteuert werden. So kann mit Hilfe der Steuerdaten beispielsweise ein Aktor aus der Ferne angesteuert werden, um ein Abschalten der Anlage, eine Überführung der Anlage in einen sicheren Zustand und/oder ein Wiedereinschalten der Anlage zu bewirken. Eine Auswertungseinheit kann mit Hilfe der Steuerdaten beispielsweise im Hinblick auf die von ihr auszuwertenden oder anzuzeigenden Daten parametriert und/oder ferngesteuert werden.

Das Aufprägen zusätzlicher Daten in Form von Steuerdaten hat somit den Vorteil, dass die Sicherheitssensoren und/oder sonstige mit ihnen verbundene Geräte auf einfache Weise aus der Ferne parametriert und/oder gesteuert werden können, wodurch die sicherheitstechnische Konfiguration maßgeblich vereinfacht wird.

In einer weiteren vorteilhaften Weiterbildung der Erfindung ist vorgesehen, dass die Steuerungseinheit dazu eingerichtet ist, zusätzliche Daten weiterzuleiten, indem die Steuerungseinheit dem empfangenen Eingangs-Sicherheitssignal aufgeprägte zusätzliche Daten in unveränderter oder veränderter Form dem Ausgangs-Sicherheitssignal aufprägt und/oder dem am Sicherheitssignalausgang anliegenden Ausgangs-Sicherheitssignal aufgeprägte zusätzliche Daten in unveränderter oder veränderter Form dem Eingangs-Sicherheitssignal aufprägt.

Dadurch ist es vorteilhaft möglich, die zusätzlichen Daten entlang der Sicherheitssensorenkette von einem Sicherheitssensor zum anderen Sicherheitssensor weiterzuleiten. So können beispielsweise Diagnosedaten, die ein erster Sicherheitssensor in einer Sicherheitssensorenkette erzeugt hat, über die Sicherheitssensorenkette an eine an den letzten Sicherheitssensor der Sicherheitssensorenkette angeschlossene Auswertungseinheit weitergeleitet werden, sodass mit Hilfe der Auswertungseinheit eine Auswertung der Diagnosedaten und eine darauf aufbauende Diagnose möglich ist. Darüber hinaus können beispielsweise Steuerdaten von der an die Sicherheitssensorenkette angeschlossenen Auswertungseinheit über die Sicherheitssensorenkette an einen oder mehrere Sicherheitssensoren und/oder sonstige an die Sicherheitssensorenkette angeschlossene Geräte weitergeleitet werden, um eine Parametrierung und/oder Fernsteuerung der Sicherheitssensoren bzw. der sonstigen Geräte vorzunehmen.

Das Weiterleiten der zusätzlichen Daten kann somit bidirektional, d.h. sowohl in Richtung von Sicherheitssignalausgang zu Sicherheitssignaleingang als auch in Richtung von Sicherheitssignaleingang zu Sicherheitssignalausgang erfolgen.

Des Weiteren kann das Weiterleiten der zusätzlichen Daten in unveränderter oder veränderter Form erfolgen. So kann ein Sicherheitssensor beispielsweise die von einem anderen Sicherheitssensor erzeugten Diagnosedaten in unveränderter Form weiterleiten, um sie einer an die Sicherheitssensorenkette angeschlossenen Auswertungseinheit zur Verfügung zu stellen. Der Sicherheitssensor kann aber auch die von einem anderen Sicherheitssensor empfangenen zusätzlichen Daten in veränderter Form weiterleiten, beispielsweise indem den empfangenen Diagnosedaten eigene Diagnosedaten des empfangenden Sicherheitssensors hinzugefügt werden.

Durch eine Weiterleitung der empfangenen zusätzlichen Daten in veränderter Form ist es darüber hinaus beispielsweise möglich, dass den zusätzlichen Daten als Diagnosedaten eine Positionsinformation hinzugefügt wird, ohne dass der Sicherheitssensor, der die zusätzlichen Daten ursprünglich erzeugt und dem Sicherheitssignal aufgeprägt hat, seine Position kennen muss. Zu diesem Zweck kann ein Weiterleitungszähler verwendet werden, dessen Zählerstand von jedem Sicherheitssensor in der Sicherheitssensorenkette inkrementiert und dem Sicherheitssignal als zusätzliche Daten aufgeprägt wird. Im Ergebnis ist es beispielsweise einer mit der Sicherheitssensorenkette verbundenen Steuerungseinheit möglich, den empfangenen zusätzlichen Daten den Zählerstand zu entnehmen und daraus die Position des Sicherheitssensors, der die zusätzlichen Daten, z.B. Diagnosedaten, ursprünglich erzeugt hat, zu ermitteln.

In einer weiteren vorteilhaften Weiterbildung des erfindungsgemäßen Sicherheitssensors ist vorgesehen, dass die Steuerungseinheit dazu eingerichtet ist, Diagnosedaten in Abhängigkeit des empfangenen Eingangs-Sicherheitssignals und/oder in Abhängigkeit des von der Steuerungseinheit erkannten Betriebszustands der Anlage zu erzeugen und dem Ausgangs-Sicherheitssignal als zusätzliche Daten aufzuprägen.

Es wird somit vorgeschlagen, dass die Steuerungseinheit des Sicherheitssensors Diagnosedaten in Abhängigkeit des von der Steuerungseinheit erkannten Betriebszustands der Anlage erzeugen kann. Wie oben bereits erläutert wurde, kann die dafür notwendige Erkennung des Betriebszustands der Anlage unter Zuhilfenahme eines externen Sicherheitsgebers erfolgen. Ebenso kann die Funktionalität eines solchen Sicherheitsgebers auch in den Sicherheitssensor integriert sein, sodass der Sicherheitssensor selbst in der Lage ist, ohne Zuhilfenahme eines externen Sicherheitsgebers den Betriebszustand der Anlage zu überwachen und zu erkennen.

So ist es beispielsweise möglich, dass der Sicherheitssensor das Öffnen einer Schutztür und damit einen unsicheren Betriebszustand der Anlage erkennt. In diesem Fall ist es beispielsweise möglich, dass die Steuerungseinheit in Folge des erkannten unsicheren Betriebszustand der Anlage Diagnosedaten erzeugt, dem Ausgangs-Sicherheitssignal als zusätzliche Daten aufprägt und eine mit dem Sicherheitssignalausgang des Sicherheitssensors direkt oder indirekt verbundene Auswertungseinheit auf diese Weise in die Lage versetzt, die Ursache des unsicheren Betriebszustands, nämlich die von dem Sicherheitssensor erkannte offene Schutztür, zu identifizieren.

Des Weiteren wird vorgeschlagen, dass die Diagnosedaten in Abhängigkeit des empfangenen Eingangs-Sicherheitssignals erzeugt und dem Ausgangs-Sicherheitssignal aufgeprägt werden können. Auf diese Weise ist es insbesondere vorteilhaft möglich, dass ein erfindungsgemäßer Sicherheitssensor, der ein Eingangs-Sicherheitssignal, welches von einem herkömmlichen Sicherheitssensor erzeugt wurde und folglich keine zusätzlichen Daten enthält, an seinem Sicherheitssignaleingang empfängt, für eine Diagnose nutzbare Diagnosedaten selbst erzeugt und dem Ausgangs-Sicherheitssignal als zusätzliche Daten aufprägt. In diesem beispielhaften Fall kann der Sicherheitssensor als Diagnosedaten insbesondere eine Positionsinformation erzeugen, die anzeigt, dass sich der für die Deaktivierung der Sensorzustände in der Sensorkette verantwortliche Sicherheitssensor in der Sicherheitssensorenkette auf der Seite des Sicherheitssignaleingangs des die Diagnosedaten erzeugenden Sicherheitssensors befindet. Auf diese Weise wird eine Kompatibilität mit herkömmlichen Sicherheitssensoren dahingehend erreicht, dass der erfindungsgemäße Sicherheitssensor unter Ausnutzung seiner vollen Funktionalität zusammen mit einem oder mehreren herkömmlichen Sensoren innerhalb einer Sicherheitssensorenkette eingesetzt werden kann.

In einer weiteren vorteilhaften Weiterbildung des erfindungsgemäßen Sicherheitssensors ist vorgesehen, dazu eingerichtet ist, dem ausgegebenen Ausgangs-Sicherheitssignal nur dann zusätzliche Daten aufzuprägen, wenn das Ausgangs-Sicherheitssignal den zweiten Signalzustand aufweist und/oder dem empfangenen Eingangs-Sicherheitssignal nur dann zusätzliche Daten aufzuprägen, wenn das Eingangs-Sicherheitssignal den zweiten Signalzustand aufweist.

Es wird somit vorgeschlagen, dass dem Sicherheitssignal nur dann zusätzliche Daten aufgeprägt werden, wenn das Sicherheitssignal einen unsicheren Betriebszustand der Anlage signalisiert. Dies ist zum einen deswegen vorteilhaft, weil zusätzliche Daten, insbesondere Diagnosedaten, die von dem Sicherheitssensor zur Verfügung gestellt werden, zu Diagnosezwecken besonders dann wertvoll sind, wenn ein unsicherer Zustand der Anlage erkannt wurde und ein oder mehrere Sicherheitssensoren der Sicherheitssensorenkette infolgedessen einen deaktivierten Sensorzustand eingenommen haben, da auf diese Weise die Ursache für das Erkennen eines unsicheren Betriebszustandes diagnostiziert werden kann.

Darüber hinaus ist es besonders vorteilhaft, dem Sicherheitssignal nur dann zusätzliche Daten aufzuprägen, wenn das Sicherheitssignal den zweiten Signalzustand aufweist und somit einen unsicheren Betriebszustand signalisiert, weil es aus dem Stand der Technik bekannt und weit verbreitet ist, dass der zweite, einen unsicheren Betriebszustand der Anlage anzeigende Signalzustand durch einen logischen Signalzustand LOW dargestellt wird, dessen zugeordneter Wertebereich den Bezugswert für die als Signalwert verwendete physikalische Größe enthält. Wird als Signalwert beispielsweise eine elektrische Spannung verwendet, so dient als Bezugsgröße für den Spannungswert in der Regel ein Bezugspotential von 0 V, sodass der zweite Signalzustand des Sicherheitssignals dadurch repräsentiert werden kann, dass der Sicherheitssignalausgang spannungsfrei geschaltet wird. Werden die zusätzlichen Daten nun dem Ausgangs-Sicherheitssignal nur in diesem zweiten Signalzustand aufgeprägt, so ist dadurch ein besonders einfacher Dekodiervorgang am Empfänger möglich, da beim Dekodieren der zusätzlichen Daten auf ein andernfalls erforderliches Herausfiltern des Gleichanteils des Sicherheitssignals, z.B. mit Hilfe eines Hochpasses, verzichtet werden kann.

In einer weiteren vorteilhaften Weiterbildung der Erfindung ist vorgesehen, dass der Sicherheitssensor eine Anzeigeeinheit aufweist, die zur optischen und/oder akustischen Anzeige des Betriebszustands der Anlage und/oder der zusätzlichen Daten eingerichtet ist.

Eine solche Anzeigeeinheit kann beispielsweise durch LEDs, z.B. in Anlehnung an eine Verkehrsampel in roter, gelber und grüner Farbe, oder durch eine andere optische Anzeigeform realisiert werden. Eine solche Anzeige kann aber beispielsweise auch akustisch, z.B. durch Wiedergabe eines Warntons realisiert werden. Denkbar und vorteilhaft ist aber auch beispielsweise eine taktile Anzeige oder eine Kombination der genannten Anzeigearten.

Auf diese Weise lassen sich vorteilhaft der Betriebszustand der Anlage und/oder die zusätzlichen Daten direkt an dem Sicherheitssensor anzeigen. So kann beispielsweise angezeigt werden, ob der Sicherheitssensor einen sicheren oder einen unsicheren Betriebszustand der Anlage erkannt hat. Als zusätzliche Daten können beispielsweise Steuerdaten oder Diagnosedaten angezeigt werden, sodass es unter anderem vorteilhaft möglich ist, der Anzeigeeinheit des Sicherheitssensors unmittelbar zu entnehmen, welcher der Sicherheitssensoren in einer Sicherheitssensorenkette einen unsicheren Betriebszustand der Lage erkannt hat. Dadurch lässt sich die Ursache für die Erkennung eines unsicheren Betriebszustandes der Anlage diagnostizieren, ohne das hierfür eine separate Auswertungs- oder Anzeigeeinheit erforderlich ist.

In einer weiteren vorteilhaften Weiterbildung des erfindungsgemäßen Sicherheitssensors ist vorgesehen, dass der mindestens eine Sicherheitssignalausgang zur Signalübertragung verbindbar ist mit einer Schalteinrichtung der Anlage, die dazu eingerichtet ist, die Anlage abzuschalten und/oder die Anlage in einen gesicherten Zustand zu überführen und/oder andere Maßnahmen zur Abwendung von Gefährdungen, die von einem unsicheren Betriebszustand der Anlage ausgehen, einzuleiten.

Eine solche Schalteinrichtung kann erfindungsgemäß insbesondere ein Schütz, ein Relay, ein Aktor und/oder eine andere Schalteinrichtung sein.

Dadurch ist es vorteilhaft möglich, den Sicherheitssensor oder eine aus Sicherheitssensoren bestehende Sicherheitssensorenkette direkt mit einer Schalteinrichtung zu verbinden und mit Hilfe der Schalteinrichtung Maßnahmen zur Abwendung von Gefährdungen einzuleiten, wenn ein unsicherer Betriebszustand der Anlage von dem Sicherheitssensor bzw. von einem der Sicherheitssensoren der Sicherheitssensorenkette erkannt wurde. Dazu kann die Anlage abgeschaltet und/oder in einem gesicherten Zustand überführt werden, sodass beispielsweise eine Gefährdung durch drehende oder anderweitig bewegliche Teile verhindert wird.

In einer weiteren vorteilhaften Weiterbildung der Erfindung ist vorgesehen, dass der mindestens eine Sicherheitssignalausgang zur Signalübertragung verbindbar ist mit einer Auswertungseinheit, die eingerichtet ist zur Auswertung empfangener Sicherheitssignale und/oder empfangener zusätzlicher Daten und/oder eingerichtet ist zur optischen und/oder akustischen Anzeige des Betriebszustand der Anlage und/oder der zusätzlichen Daten.

Die Funktionalität einer solchen Auswertungseinheit kann dabei erfindungsgemäß auch in einen Sicherheitssensor integriert sein.

Eine solche Auswertungseinheit kann vorteilhaft insbesondere verbunden werden mit dem mindestens einen Sicherheitssignalausgang des letzten Sicherheitssensors in einer Sicherheitssensorenkette. Dadurch kann die Auswertungseinheit verwendet werden, um die Sicherheitssignale und/oder die zusätzlichen Daten auszuwerten, die von den mit der Auswertungseinheit verbundenen Sicherheitssensoren ausgegeben werden. Auf Grundlage einer Auswertung der empfangenen Sicherheitssignale können beispielsweise Maßnahmen eingeleitet werden, die der Abwendung von Gefährdungen, die von einem unsicheren Betriebszustand der Anlage ausgehen, dienen. Auf Grundlage einer Auswertung der zusätzlichen Daten kann, wenn diese beispielsweise von den Sicherheitssensoren erzeugte Diagnosedaten umfassen, die Auswertungseinheit eine Diagnose der Ursache für das Erkennen eines unsicheren Betriebszustandes der Anlage durchführen. Des Weiteren ist es erfindungsgemäß mit Hilfe der Auswertungseinheit möglich, den Betriebszustand der Anlage und/oder die zusätzlichen Daten anzuzeigen, um diese Informationen dem Betriebs-, Wartungs- und/oder Instandsetzungspersonal zur Verfügung zu stellen.

Gemäß einer weiteren vorteilhaften Weiterbildung des erfindungsgemäßen Sicherheitssensors ist vorgesehen, dass der Signalwert ein auf ein Bezugspotential bezogener Wert einer elektrischen Spannung ist.

Vorteilhaft ist es dabei, wenn entweder der erste oder der zweiter Wertebereich das Bezugspotential, insbesondere ein Bezugspotential von 0 V, umfasst.

Umfasst entweder der erste oder der zweite Wertebereich das Bezugspotential, so ist es vorteilhaft und auf einfache Weise möglich, ein Sicherheitssignal des Signalzustands, der diesem Wertebereich zugeordnet ist, auszugeben, indem der Sicherheitssignalausgang spannungsfrei geschaltet wird. Vorteilhaft ist es dabei des Weiteren, wenn der zweite Wertebereich, dem der zweite Signalzustand, der einen unsicheren Betriebszustand der Anlage signalisiert, zugeordnet ist, das Bezugspotential umfasst. In diesem Fall führt ein Ausfall des Sicherheitssensors oder seiner Steuerungseinheit, z.B. durch einen Ausfall der Versorgungsspannung, dazu, dass die an dem Sicherheitssignalausgang als Signalwert ausgegebene Spannung auf das Bezugspotential abfällt und somit automatisch ein unsicherer Betriebszustand der Anlage signalisiert wird. Dadurch kann die Zuverlässigkeit der Überwachung der Betriebssicherheit in vorteilhafter Weise erhöht werden.

Gemäß einer weiteren vorteilhaften Weiterbildung der Erfindung ist vorgesehen, dass der Signalwert in Form einer elektrischen Spannung innerhalb eines Wertebereichs von +11 V bis +30 V für den ersten Signalzustand und innerhalb eines Wertebereichs von -3 V bis +2 V für den zweiten Signalzustand verändert wird.

Die genannten Spannungswerte entsprechen den in einschlägigen Normen der Sicherheitstechnik festgelegten Werten zur Signalisierung eines unsicheren oder sicheren Betriebszustandes einer Anlage (vgl. hierzu z. B. die Norm DIN EN 61496-1 (VDE 0113-201): 2014-05). Die Verwendung der genannten Wertebereiche hat daher den Vorteil, dass ein Sicherheitssensor oder ein sonstiges Gerät, das gängigen Standards der Sicherheitstechnik entspricht, anhand eines von einem erfindungsgemäßen Sicherheitssensor ausgegebenen Sicherheitssignals den durch den jeweiligen Signalzustand signalisierten Betriebszustand der Anlage unabhängig von den dem Sicherheitssignal aufgeprägten zusätzlichen Daten zuverlässig erkennen kann. Dadurch werden vorteilhaft die Standardkonformität des erfindungsgemäßen Sicherheitssensors und seine Kompatibilität mit herkömmlichen standardkonformen Sicherheitssensoren und sonstigen Geräten sichergestellt.

Gemäß einer weiteren vorteilhaften Weiterbildung der Erfindung ist vorgesehen, dass die Steuerungseinheit dazu eingerichtet ist, dem ausgegebenen Ausgangs-Sicherheitssignal und/oder dem empfangenen Eingangs-Sicherheitssignal zusätzliche Daten aufzuprägen mit Hilfe eines unipolaren oder bipolaren Leitungscodes, eines AMI-Codes, eines Blockcodes, eines Manchester-Codes, einer Amplitudenumtastung, einer Frequenzumtastung, einer Phasenumtastung, einer Quadraturamplitudenmodulation, einer Pulsamplitudenmodulation, einer Pulsphasenmodulation, einer Pulsfrequenzmodulation und/oder einer Pulsweitenmodulation.

Die dem Sicherheitssignal aufzuprägenden zusätzlichen Daten können in analoger oder digitaler Form vorliegen. Die zusätzlichen Daten können durch Basisbandübertragung als Basisbandsignal oder als Nutzsignal, das einem Trägersignal aufmoduliert wird, übertragen werden.

Die Nutzung eines unipolaren oder bipolaren Leitungscodes, eines AMI-Codes (Alternate-Mark-Inversion-Codes), eines Blockcodes oder eines Manchester-Codes hat den Vorteil, dass die dem Sicherheitssignal aufgeprägten zusätzlichen Daten als Basisbandsignal übertragen werden können und auf diese Weise eine besonders einfache und kostengünstige Realisierung der notwendigen Übertragungstechnik möglich ist. Die Nutzung einer Amplitudenumtastung oder Amplitudenmodulation bietet den Vorteil, dass eine Demodulation der aufgeprägten zusätzlichen Daten mit sehr einfachen Schaltungen möglich ist. Die Nutzung einer Frequenzumtastung oder Frequenzmodulation bietet den Vorteil, dass Modulation und Demodulation einfach zu realisieren sind und die Übertragung besonders robust gegen Störungen ist. Die Nutzung einer Phasenumtastung oder Phasenmodulation bietet den Vorteil einer hohen Robustheit gegen Störungen und eines geringen Bandbreitenbedarfs. Die Nutzung einer Quadraturamplitudenmodulation bietet den Vorteil, dass eine höhere Anzahl von Datenbits pro Symbol und Zeiteinheit übertragen werden kann, sodass bei vergleichsweise geringem Bandbreitenbedarf höhere Datenraten erzielt werden können. Die Nutzung einer Pulsamplitudenmodulation, Pulsphasenmodulation, Pulsfrequenzmodulation und/oder Pulsweitenmodulation bieten den Vorteil einer einfachen und kostengünstigen übertragungstechnischen Realisierung.

Die Erfindung wird nachfolgend anhand von Ausführungsbeispielen mit den beigefügten Zeichnungen näher erläutert. Für gleiche oder einander entsprechende Elemente oder Merkmale werden dabei identische Bezugszeichen verwendet. Es zeigen:
- Figur 1:: Schematische Darstellung des Aufbaus eines erfindungsgemäßen Sicherheitssensors;
- Figur 2:: Zwei in Reihe geschaltete erfindungsgemäße Sicherheitssensoren, die mit Hilfe externer Sicherheitsgeber die Betriebssicherheit einer Anlage überwachen;
- Figur 3:: Den Zeitverlauf eines Sicherheitssignals mit einem ersten und einem zweiten Signalzustand;
- Figur 4:: Den Zeitverlauf eines Sicherheitssignals mit im zweiten Signalzustand durch Basisbandübertragung unter Nutzung eines Manchester-Codes aufgeprägten zusätzlichen Daten;
- Figur 5:: Den Zeitverlauf eines Sicherheitssignals mit im zweiten Signalzustand unter Nutzung einer Frequenzumtastung aufgeprägten zusätzlichen Daten;
- Figur 6:: Den Zeitverlauf eines Sicherheitssignals mit im zweiten Signalzustand durch Basisbandübertragung unter Nutzung eines bipolaren Codes aufgeprägten zusätzlichen Daten;
- Figur 7:: Den Zeitverlauf eines Sicherheitssignals mit im ersten und im zweiten Signalzustand durch Basisbandübertragung unter Nutzung eines Manchester-Codes aufgeprägten zusätzlichen Daten;
- Figur 8:: Eine Sicherheitssensorenkette mit einer Auswertungseinheit und von den Sicherheitssensoren ausgegebenen Sicherheitssignalen;
- Figur 9:: Eine Sicherheitssensorenkette mit einer Auswertungseinheit, von den Sicherheitssensoren ausgegebenen Sicherheitssignalen und den Ausgangs-Sicherheitssignalen aufgeprägten zusätzlichen Daten;
- Figur 10:: Eine Sicherheitssensorenkette mit einer Auswertungseinheit, einem Aktor, von den Sicherheitssensoren ausgegebenen Sicherheitssignalen und den Eingangs- sowie den Ausgangs-Sicherheitssignalen aufgeprägten zusätzlichen Daten;
- Figur 11:: Eine Sicherheitssensorenkette mit einer Auswertungseinheit, einer Schalteinrichtung einer Anlage, von den Sicherheitssensoren ausgegebenen Sicherheitssignalen und den Ausgangs-Sicherheitssignalen aufgeprägten zusätzlichen Daten;
- Figur 12:: Eine Sicherheitssensorenkette mit einer Auswertungseinheit, von den Sicherheitssensoren ausgegebenen Sicherheitssignalen und den Ausgangs-Sicherheitssignalen unter Nutzung einer vorteilhaften Form der Phasenumtastung aufgeprägten zusätzlichen Daten;

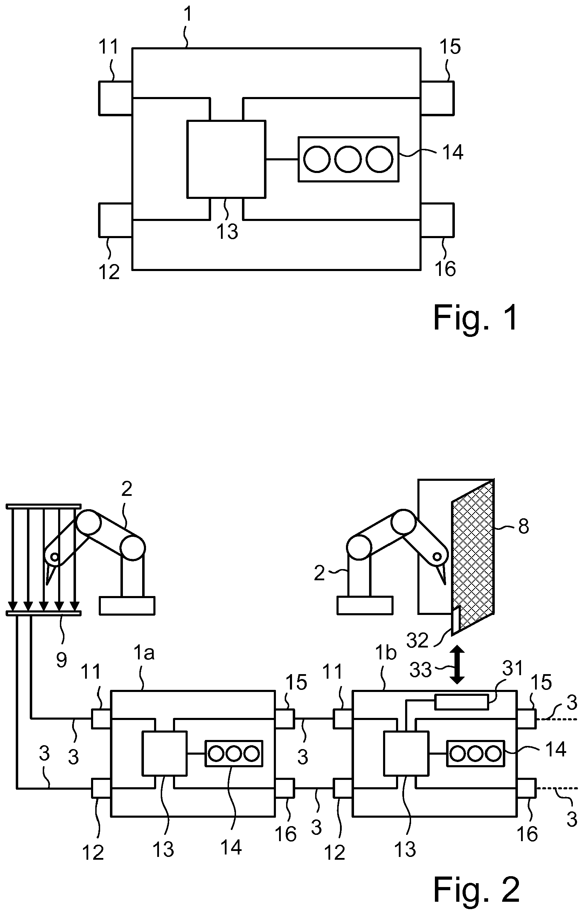

Figur 1 lässt schematisch den Aufbau eines erfindungsgemäßen Sicherheitssensors 1 erkennen. Der Sicherheitssensor 1 hat zwei Sicherheitssignaleingänge 11, 12 zum Empfang eines Eingangs-Sicherheitssignals und zwei Sicherheitssignalausgänge 15, 16 zur Ausgabe eines Ausgangs-Sicherheitssignals. Der Sicherheitssensor 1 weist des Weiteren eine Steuerungseinheit 13 auf, die mit den beiden Sicherheitssignaleingängen 11, 12 und den beiden Sicherheitssignalausgängen 15, 16 verbunden ist.

Die Steuerungseinheit 13 ist dazu eingerichtet, den Betriebszustand einer zu überwachenden Anlage zu erkennen und an den beiden Sicherheitssignalausgängen 14, 15 ein Ausgangs-Sicherheitssignal auszugeben, dessen Signalzustand den erkannten Betriebszustand signalisiert. In Abhängigkeit des erkannten Betriebszustands nimmt der Sicherheitssensor 1 einen aktivierten oder einen deaktivierten Sensorzustand ein. Ein aktivierter Sensorzustand liegt vor, wenn die Steuerungseinheit 13 einen sicheren Betriebszustand der Anlage erkannt hat. Ein deaktivierter Sensorzustand liegt vor, wenn die Steuerungseinheit 13 einen unsicheren Betriebszustand der Anlage erkannt hat. Darüber hinaus ist die Steuerungseinheit 13 dazu eingerichtet, einem Sicherheitssignal zusätzliche Daten aufzuprägen und aus einem Sicherheitssignal zusätzliche Daten zu dekodieren.

Der Sicherheitssensor weist außerdem eine Anzeigeeinheit 14 auf, die mit der Steuerungseinheit 13 verbunden und zur optischen Anzeige des Betriebszustands der Anlage und zusätzlicher Daten eingerichtet ist. Die optische Anzeige erfolgt dabei in diesem Ausführungsbeispiel durch LEDs in Anlehnung an eine Verkehrsampel in roter, gelber und grüner Farbe.

Figur 2 zeigt zwei erfindungsgemäße Sicherheitssensoren 1a, 1b, die in Reihe geschaltet sind, indem der erste Sicherheitssignalausgang 15 des Sicherheitssensors 1a mit dem ersten Sicherheitssignaleingang 11 des Sicherheitssensors 1b und der zweite Sicherheitssignalausgang 16 des ersten Sicherheitssensors 1a mit dem zweiten Sicherheitssignaleingang 12 des zweiten Sicherheitssensors 1b jeweils über eine Verbindungsleitung 3 zur Signalübertragung verbunden sind. Mit den Sicherheitssignalausgängen 15, 16 des Sicherheitssensors 1b können außerdem - hier durch gestrichelt gezeichnete Verbindungsleitungen 3 angedeutet - weitere Sicherheitssensoren 1, 1a, 1b, Auswertungseinheiten, Schalteinrichtungen, Aktoren und/oder sonstige Vorrichtungen verbunden werden.

Die Signalübertragung erfolgt in diesem und den folgenden Ausführungsbeispielen redundant über zwei parallele Verbindungsleitungen 3. Dies hat den Vorteil, dass der über die Sicherheitssignalausgänge 15, 16 signalisierte Sensorzustand, insbesondere ein deaktivierter Sensorzustand, auch dann zuverlässig von einem mit den Sicherheitssignalausgängen 15, 16 verbundenen anderen Sicherheitssensor 1, 1a, 1b, einer Auswertungseinheit, einer Schalteinrichtung und/oder einer sonstigen Vorrichtung erkannt werden kann, wenn die Signalübertragung über eine der beiden parallelen Verbindungsleitungen 3 gestört ist.

Beide Sicherheitssensoren 1a, 1b überwachen jeweils die Betriebssicherheit einer Anlage 2. Zu diesem Zweck greifen die Sicherheitssensoren auf die Funktionalität externer Sicherheitsgeber 8, 9 zurück. Bei dem externen Sicherheitsgeber 9 handelt es sich um ein Lichtgitter, das in der Nähe der Anlage 2 positioniert ist, um anhand einer Unterbrechung des Lichtgitters erkennen zu können, ob eine Person oder ein Gegenstand in einen Sicherheitsbereich um die Anlage 2 herum eintritt und damit eine Gefährdung verursacht. Das Lichtgitter 9 ist über zwei parallele Verbindungsleitungen 3 mit den Sicherheitssignaleingängen 11, 12 des Sicherheitssensors 1a verbunden. Wird das Lichtgitter unterbrochen und damit eine Gefährdung erkannt, sendet das Lichtgitter ein Sicherheitssignal, das einen unsicheren Betriebszustand der Anlage signalisiert, über die Verbindungsleitungen 3 an den Sicherheitssensor 1a, dessen Steuerungseinheit 13 auf diese Weise in die Lage versetzt wird, den aktuellen Betriebszustand der Anlage 2 zu erkennen.

Zusätzlich zu den Komponenten des Sicherheitssensors 1a, die bereits in Zusammenhang mit Figur 1 beschrieben wurden, verfügt der Sicherheitssensor 1b über eine Kommunikationseinheit 31, die mit der Steuerungseinheit 13 des Sicherheitssensors 1b verbunden und dazu eingerichtet ist, mit einem externen Sicherheitsgeber 32 zu kommunizieren. Bei dem Sicherheitsgeber 32 handelt es sich um einen Betätiger, der an einer Schutztür 8 angebracht ist. Die Schutztür 8 dient dazu, einen gefährlichen und daher verbotenen Zutritt einer Person zu einem Sicherheitsbereich um die Anlage 2 während des Betriebs der Anlage 2 zu verhindern. Durch die Kommunikation des Betätigers 32 mit der Kommunikationseinheit 31 des Sicherheitssensors 1b kann ein Öffnen der Schutztür 8 erkannt und diese Information dem Sicherheitssensor 1b zur Verfügung gestellt werden. Auf diese Weise wird die Steuerungseinheit 13 des Sicherheitssensors 1b in die Lage versetzt, den aktuellen Betriebszustand der Anlage 2 zu erkennen.

Alternativ oder ergänzend zu den Ausführungsbeispielen der Sicherheitssensoren 1a und 1b kann die Funktionalität eines Sicherheitsgebers auch in den Sicherheitssensor integriert sein, sodass der Sicherheitssensor in der Lage ist, ohne einen externen Sicherheitsgeber 9, 32 den Betriebszustand der Anlage 2 zu erkennen.

Ist sowohl das Lichtgitter 9 ununterbrochen als auch die Schutztür 8 geschlossen, so erkennen die Steuerungseinheiten 13 beider Sicherheitssensoren 1a, 1b einen sicheren Betriebszustand der Anlage 2. In diesem Fall weisen beide Sicherheitssensoren 1a, 1b einen aktivierten Sensorzustand auf und beide Steuerungseinheiten 13 der Sicherheitssensoren 1a, 1b geben an den Sicherheitssignalausgängen 15, 16 des jeweiligen Sicherheitssensors ein Sicherheitssignal aus, das den ersten Signalzustand aufweist und damit einen sicheren Betriebszustand der Anlage 2 signalisiert.

Erkennt eine Steuerungseinheit 13 mindestens eines der Sicherheitssensoren 1a, 1b einen unsicheren Betriebszustand der Anlage 2, z.B. aufgrund einer Unterbrechung des Lichtgitters 9 und/oder aufgrund eines Öffnens der Schutztür 8, so nimmt dieser Sicherheitssensor 1a, 1b einen deaktivierten Sensorzustand ein und dessen Steuerungseinheit 13 gibt an dessen Sicherheitssignalausgängen 15, 16 ein Ausgangs-Sicherheitssignal aus, das den zweiten Signalzustand aufweist und somit einen unsicheren Betriebszustand der Anlage signalisiert.

Den Betriebszustand der Anlage 2 kann die Steuerungseinheit 13 mit Hilfe eines externen Sicherheitsgebers 9, 32 und/oder mit Hilfe einer in den Sicherheitssensor integrierten Funktionalität eines Sicherheitsgebers erkennen. Die Steuerungseinheit 13 kann den Betriebszustand der Anlage 2 außerdem anhand des Zustands des Eingangs-Sicherheitssignals erkennen, das den Sicherheitssignaleingängen 11, 12 empfangen wird.

Empfängt der Sicherheitssensor 1b bspw. ein Eingangs-Sicherheitssignal des zweiten Signalzustands an einem oder beiden seiner Sicherheitssignaleingänge 11, 12, so nimmt der Sicherheitssensor 1b einen deaktivierten Zustand ein und gibt an beiden Sicherheitssignalausgängen 15, 16 des Sicherheitssensors 1b ein Ausgangs-Sicherheitssignal aus, das ebenfalls den zweiten Signalzustand aufweist und damit einen unsicheren Betriebszustand der Anlage 2 signalisiert.

Empfängt der Sicherheitssensor 1b hingegen an beiden Sicherheitssignaleingängen 11, 12 ein Eingangs-Sicherheitssignal, das den ersten Signalzustand aufweist und damit einen sicheren Betriebszustand der Anlage 2 signalisiert und wird der Kommunikationseinheit 31 über die Kommunikationsverbindung 33 von dem Betätiger 32 darüber hinaus eine geschlossene Schutztür 8 gemeldet, so gibt die Steuerungseinheit 13 des Sicherheitssensors 1b an den Sicherheitssignalausgängen 15, 16 des Sicherheitssensors 1b ein Ausgangs-Sicherheitssignal aus, das ebenfalls den ersten Signalzustand aufweist und damit einen sicheren Betriebszustand der Anlage 2 signalisiert.

Darüber hinaus können die Sicherheitssensoren 1a, 1b den jeweils erkannten Betriebszustand der Anlage 2 mit Hilfe ihrer Anzeigeeinheiten 14 anzeigen, z.B. mit Hilfe einer grünen LED im Falle eines sicheren Betriebszustands und mit Hilfe einer roten LED im Fall eines unsicheren Betriebszustands.

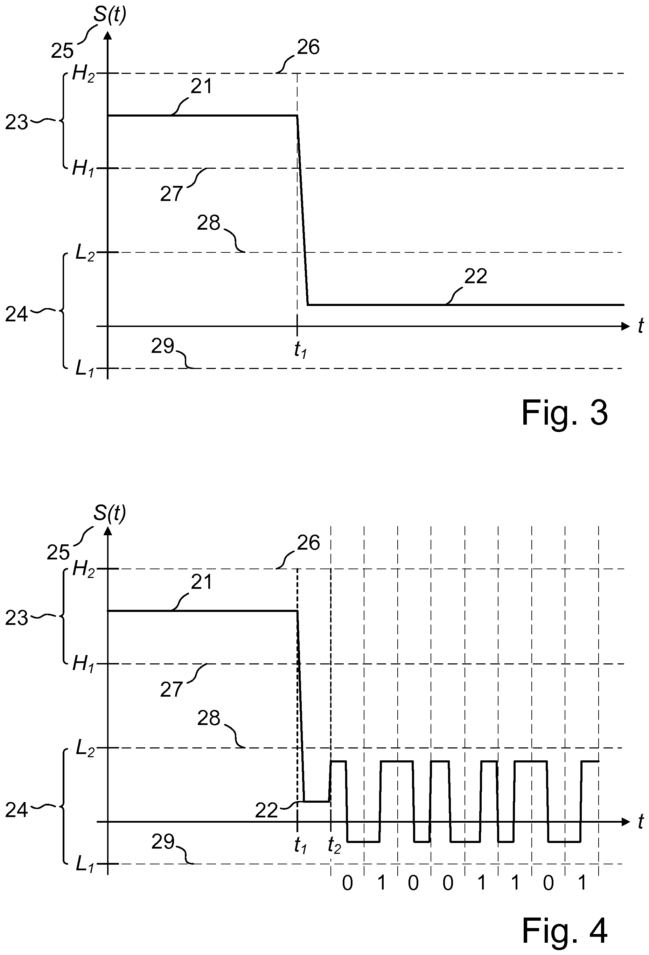

Die Figur 3 zeigt einen beispielhaften Zeitverlauf eines Sicherheitssignals, das von einem Sicherheitssensor 1, 1a, 1b ausgegeben und/oder empfangen werden kann, über der Zeit t. Ein solches Sicherheitssignal kann bspw. ein Ausgangs-Sicherheitssignal sein, das ein Sicherheitssensor an seinem mindestens einen Sicherheitssignalausgang ausgibt.

In dem in Figur 3 gezeigten Ausführungsbeispiel werden dem Sicherheitssignal keine zusätzlichen Daten aufgeprägt.

Das Sicherheitssignal hat einen Signalwert 25, der in diesem und den weiteren im Folgenden gezeigten Ausführungsbeispielen der Wert einer elektrischen Spannung ist, die sich auf ein Bezugspotential von 0 V bezieht. Die Darstellungen der Sicherheitssignale in diesem und den folgenden Ausführungsbeispielen sind im Hinblick auf den Wert der Spannung, d. h. hinsichtlich des Signalwerts 25, nicht maßstabstreu.

Der Signalwert 25 kann zwei verschiedene Signalzustände, nämlich einen ersten Signalzustand 21 oder einen zweiten Signalzustand 22 aufweisen. Der erste Signalzustand 21 wird repräsentiert durch einen Signalwert 25, d. h. eine elektrische Spannung, aus einem ersten, dem ersten Signalzustand 21 zugeordneten Wertebereich 23, während der zweite Signalzustand 22 repräsentiert wird durch einen Signalwert 25 aus einem zweiten, den zweiten Signalzustand 22 zugeordneten Wertebereich 24, der vom ersten Wertebereich 23 verschieden ist.

Die Grenzen des ersten Wertebereichs 23 bilden ein oberer Schwellenwert 26 und ein unterer Schwellenwert 27, während die Grenzen des zweiten Wertebereichs 24 ein oberer Schwellenwert 28 und ein unterer Schwellenwert 29 bilden. Der untere Schwellenwert 27 des Signalwerts 25 wird gebildet durch eine Spannung von +11 V, der obere Schwellenwert 26 wird gebildet durch eine Spannung von +30 V, der untere Schwellenwert 29 wird gebildet durch eine Spannung von -3 V und der obere Schwellenwert 28 wird gebildet durch eine Spannung von +2 V.

Das Sicherheitssignal weist im Zeitverlauf zunächst den ersten Signalzustand 21 auf, der einen sicheren Betriebszustand der Anlage signalisiert. Zum Zeitpunkt *t₁* erkennt der Sicherheitssensor, der das beispielhaft in Figur 3 gezeigte Sicherheitssignal ausgibt, einen unsicheren Betriebszustand der Anlage, und nimmt daher einen deaktivierten Sensorzustand ein. Nach dem Zeitpunkt *t₁* weist das von dem Sicherheitssensor ausgegebene Sicherheitssignal daher den zweiten Signalzustand 22 auf, der einen unsicheren Betriebszustand der Anlage signalisiert.

Die Figur 4 zeigt einen beispielhaften Zeitverlauf eines Sicherheitssignals, wie es von einem erfindungsgemäßen ausgegeben und/oder empfangen werden kann. Bezüglich der Übereinstimmungen mit der Figur 3 wird zur Vermeidung von Wiederholungen auf die Ausführungen zu Figur 3 verwiesen.

Auch Figur 4 lässt erkennen, dass zum Zeitpunkt *t₁* der erfindungsgemäße Sicherheitssensor, der das gezeigte beispielhafte Sicherheitssignal ausgibt, einen unsicheren Betriebszustand der Anlage erkennt und einen deaktivierten Sensorzustand einnimmt. Das von dem Sicherheitssensor ausgegebene Sicherheitssignal wechselt folglich in den zweiten Signalzustand 22, der einen unsicheren Betriebszustand der Anlage signalisiert.

Im in der Figur 4 gezeigten Ausführungsbeispiel beginnt die Steuerungseinheit des erfindungsgemäßen Sicherheitssensors zum Zeitpunkt *t₂*, dem ausgegebenen Ausgangs-Sicherheitssignal zusätzliche Daten aufzuprägen, indem in Abhängigkeit der zusätzlichen Daten der Signalwert des ausgegebenen Ausgangs-Sicherheitssignals verändert wird. Figur 4 zeigt ein Ausführungsbeispiel, bei welchem dem Sicherheitssignal zusätzliche Daten in Form der Bitfolge 01001101 aufgeprägt werden. Dabei kann es sich beispielsweise um Steuerdaten und/oder Diagnosedaten handeln.

Zu erkennen ist des Weiteren, dass der Signalwert des ausgegebenen Ausgangs-Sicherheitssignals innerhalb der Grenzen 28, 29 des Wertebereichs 24 verändert wird, der dem gegenwärtig ausgegebenen zweiten Signalzustand 22 zugeordnet ist. Die zusätzlichen Daten werden demnach dem Ausgangs-Sicherheitssignal des zweiten Signalzustands 22 aufgeprägt, ohne dass der Wert der Spannung den unteren Schwellenwert 29 in Höhe von -3 V unterschreitet oder den oberen Schwellenwert 28 von +2 V überschreitet. Dadurch wird durch das Sicherheitssignal unabhängig von den aufgeprägten zusätzlichen Daten unverändert ein unsicherer Betriebszustand der Anlage signalisiert, sodass ein Sicherheitssensor oder eine andere Vorrichtung, die dieses Sicherheitssignal empfängt, eine unverfälschte Information über den erkannten Betriebszustand der Anlage erhält. Das Aufprägen der zusätzlichen Daten hat somit keinen Einfluss auf den Signalzustand, der den erkannten Betriebszustand der Anlage signalisiert.

Zum Aufprägen der zusätzlichen Daten wird in dem in Figur 4 gezeigten Ausführungsbeispiel eine Basisbandübertragung verwendet, wobei zur Leitungskodierung der Daten ein Manchester-Code genutzt wird, der als besondere Form einer Phasenumtastung (Phase Shift Keying) sowie eines Blockcodes angesehen werden kann.

Der in dem gezeigten Ausführungsbeispiel verwendete Manchester-Code sieht vor, dass eine binäre 0 durch eine fallende Signalflanke, d. h. durch einen Wechsel von einem höheren Signalpegel zu einem niedrigeren Signalpegel, und eine binäre 1 in entsprechender Weise durch eine steigende Signalflanke kodiert wird. Die Nutzung des Manchester-Codes hat den Vorteil, dass je Bitdauer mindestens ein Wechsel des Signalpegels erfolgt. Dadurch ist eine Taktrückgewinnung aus dem empfangenen Signal möglich.

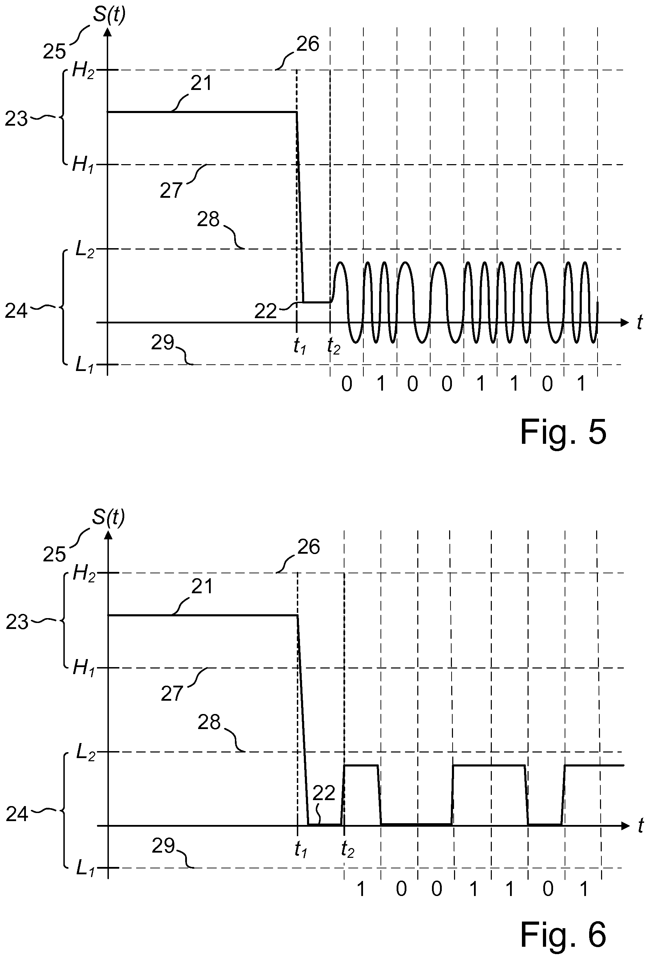

Figur 5 zeigt einen weiteren beispielhaften Zeitverlauf eines Sicherheitssignals, wie es von einem erfindungsgemäßen Sicherheitssensor ausgegeben und/oder empfangen werden kann. Bezüglich der Übereinstimmungen mit den Figuren 3 und 4 wird zur Vermeidung von Wiederholungen auf die Ausführungen zu den Figuren 3 und 4 verwiesen.

Im Gegensatz zum in Figur 4 gezeigten Ausführungsbeispiel wird in dem in Figur 5 gezeigten Ausführungsbeispiel eine Frequenzumtastung verwendet, um dem Sicherheitssignal die zusätzlichen Daten aufzuprägen. Dabei wird eine binäre 0 durch eine erste Frequenz und eine binäre 1 durch eine zweite, höhere Frequenz des Signals dargestellt.

Figur 6 zeigt einen weiteren beispielhaften Zeitverlauf eines Sicherheitssignals, wie es von einem erfindungsgemäßen Sicherheitssensor ausgegeben und/oder empfangen werden kann. Bezüglich der Übereinstimmungen mit den Figuren 3-5 wird zur Vermeidung von Wiederholungen auf die Ausführungen zu den Figuren 3-5 verwiesen.

In dem in Figur 6 gezeigten Ausführungsbeispiel wird dem Sicherheitssignal beispielhaft die Bitfolge 1001101 aufgeprägt, die ein Beispiel zusätzlicher Daten darstellt, bei denen es sich um Steuer- und/oder Diagnosedaten handeln kann. Im Gegensatz zu den vorangegangenen Ausführungsbeispielen wird zum Aufprägen der zusätzlichen Daten eine Basisbandübertragung verwendet, wobei in diesem Ausführungsbeispiel die zusätzlichen Daten mit Hilfe eines unipolaren Leitungscodes aufgeprägt werden, bei dem eine binäre 1 durch einen ersten Signalpegel und eine binäre 0 durch einen zweiten Signalpegel kodiert wird, wobei der zweite Signalpegel dem Bezugspotential von 0 V entspricht.

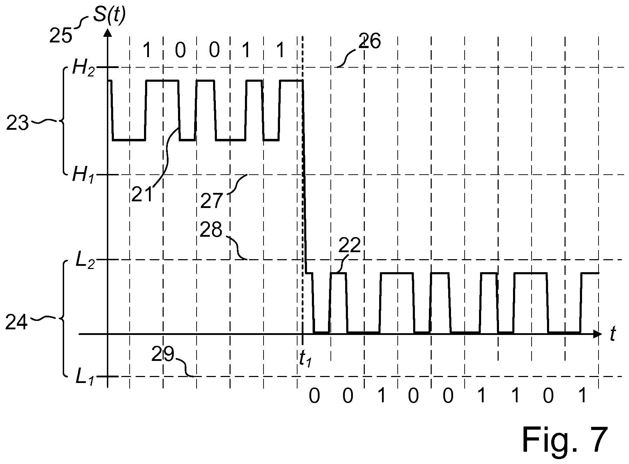

Figur 7 zeigt einen weiteren beispielhaften Zeitverlauf eines Sicherheitssignals, wie es von einem erfindungsgemäßen Sicherheitssensor ausgegeben und/oder empfangen werden kann. Bezüglich der Übereinstimmungen mit den Figuren 3-6 wird zur Vermeidung von Wiederholungen auf die Ausführungen zu den Figuren 3-6 verwiesen.

Während in den vorangegangenen Ausführungsbeispielen der Figuren 4-6 dem Sicherheitssignal nur zusätzliche Daten aufgeprägt wurden, wenn das Sicherheitssignal den zweiten Signalzustand 22 aufweist, werden in dem in Figur 7 gezeigten Ausführungsbeispiel dem Sicherheitssignal zusätzliche Daten sowohl aufgeprägt, wenn das Sicherheitssignal den ersten Signalzustand 21 aufweist, als auch dann, wenn das Sicherheitssignal den zweiten Signalzustand 22 aufweist. Dabei wird zum Aufprägen der zusätzlichen Daten wiederum eine Basisbandübertragung in Verbindung mit einem Manchester-Code verwendet.

Bis zum Zeitpunkt *t₁* weist das Sicherheitssignal den ersten Signalzustand 21 auf. Zum Aufprägen der zusätzlichen Daten wird der Signalwert des Sicherheitssignals daher innerhalb der Grenzen 26, 27 des dem ersten Signalzustand 21 zugeordneten Wertebereichs 23 verändert. Nach dem Wechsel des Signalzustands in den zweiten Signalzustand 22 zum Zeitpunkt *t₁* wird zum Aufprägen der zusätzlichen Daten der Signalwert des Sicherheitssignals innerhalb der Grenzen 28, 29 des dem zweiten Signalzustand 22 zugeordneten Wertebereichs 24 verändert.

Das Ausführungsbeispiel in Figur 7 verdeutlicht, dass ein Aufprägen zusätzlicher Daten auf ein ausgegebenes Ausgangs-Sicherheitssignal und/oder ein empfangenes Eingangs-Sicherheitssignal unabhängig davon möglich ist, ob das gegenwärtig ausgegebene bzw. empfangene Sicherheitssignal den ersten oder den zweiten Signalzustand aufweist.

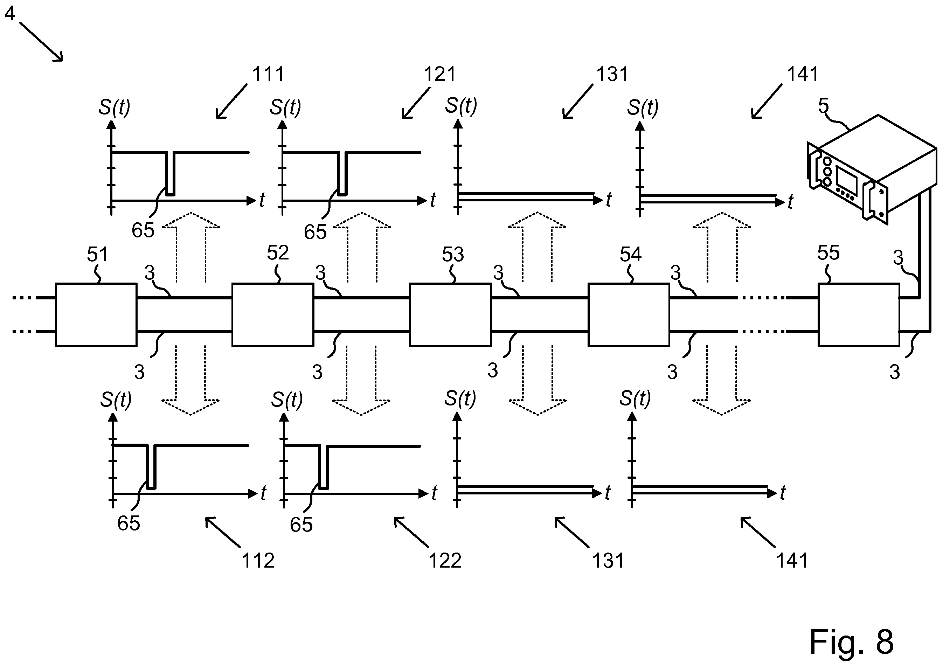

Die Figur 8 zeigt ein Ausführungsbeispiel einer Sicherheitssensorenkette 4 mit einer Mehrzahl von Sicherheitssensoren 51, 52, 53, 54, 55. Jeder der Sicherheitssensoren 51, 52, 53, 54, 55 verfügt über zwei Sicherheitssignaleingänge und zwei Sicherheitssignalausgänge. Die beiden Sicherheitssignalausgänge des Sicherheitssensors 51 sind zur Signalübertragung jeweils über eine Verbindungsleitung 3 mit den Sicherheitssignaleingängen des Sicherheitssensors 52 verbunden, die Sicherheitssignalausgänge des Sicherheitssensors 52 sind in entsprechender Weise mit den Sicherheitssignaleingängen des Sicherheitssensors 53 verbunden usw. Auf diese Weise werden die Sicherheitssensoren 51, 52, 52, 54, 55 durch eine Reihenschaltung zu einer Sicherheitssensorenkette kaskadiert. Wie in der Figur 8 durch eine gestrichelte Linie angedeutet, kann die Sicherheitssensorenkette auf Seite der Sicherheitssignaleingänge des Sicherheitssensors 51 sowie zwischen den Sicherheitssensoren 54 und 55 weitere Sicherheitssensoren umfassen. Die Sicherheitssignalausgänge des Sicherheitssensors 55 sind über Verbindungsleitungen 3 mit an einer Auswertungseinheit 5 verbunden. Die Auswertungseinheit 5 ist eingerichtet zur Auswertung empfangener Sicherheitssignale und empfangener zusätzlicher Daten sowie zur optischen und akustischen Anzeige des Betriebszustands der Anlage und der zusätzlichen Daten.

Das in Figur 8 gezeigte Ausführungsbeispiel zeigt des Weiteren, dass die Sicherheitssensoren 51 und 52 einen aktivierten Sensorzustand aufweisen, da sie jeweils einen sicheren Betriebszustand der Anlage erkannt haben. Der Sicherheitssensor 51 gibt folglich an seinem ersten Sicherheitssignalausgang ein Ausgangs-Sicherheitssignal 111 und an seinem zweiten Sicherheitssignalausgang ein Ausgangs-Sicherheitssignal 112 aus, die jeweils den ersten Signalzustand aufweisen. Diese Sicherheitssignale werden als Eingangs-Sicherheitssignale an den Sicherheitssignaleingängen des Sicherheitssensors 52 empfangen. Der Sicherheitssensor 52 gibt an seinen Sicherheitssignalausgängen Ausgangs-Sicherheitssignale 121 und 122 aus, die ebenfalls den ersten Signalzustand aufweisen und somit einen sicheren Betriebszustand der Anlage signalisieren. Diese Sicherheitssignale werden als Eingangs-Sicherheitssignale von dem Sicherheitssensor 53 empfangen.

Im Gegensatz zu den Sicherheitssensoren 51 und 52 erkennt der Sicherheitssensor 53 einen unsicheren Betriebszustand der Anlage, der bspw. durch eine geöffnete Schutztür hervorgerufen wird. Daher nimmt der Sicherheitssensor 53 einen deaktivierten Sensorzustand ein und gibt an seinen Sicherheitssignalausgänge jeweils ein Sicherheitssignal 131 aus, das den zweiten Signalzustand aufweist, um den erkannten unsicheren Betriebszustand der Anlage zu signalisieren.

Die Sicherheitssignale 131 werden als Eingangs-Sicherheitssignale von dem Sicherheitssensor 54 empfangen. Der Sicherheitssensor 54 erkennt anhand des empfangenen Eingangs-Sicherheitssignals des zweiten Signalzustands einen unsicheren Betriebszustand der Anlage, nimmt aus diesem Grund ebenfalls einen deaktivierten Sensorzustand ein und gibt an seinen Sicherheitssignalausgängen Ausgangs-Sicherheitssignale 141 aus, die den zweiten Signalzustand aufweisen, der einen unsicheren Betriebszustand der Anlage signalisiert.

Auf diese Weise löst die Deaktivierung eines Sicherheitssensors der Sicherheitssensorenkette 4, im gezeigten Ausführungsbeispiel die Deaktivierung des Sicherheitssensors 53, die Deaktivierung sämtlicher Sensoren der Sicherheitssensorenkette 4 aus, die auf der Seite der Sicherheitssignalausgänge des deaktivierten Sicherheitssensors mit diesem in Reihe geschaltet sind.

Dadurch kann die Information über den erkannten Betriebszustand der Anlage, der im Ausführungsbeispiel der Figur 8 insgesamt ein unsicherer Betriebszustand ist, über die Sicherheitssensorenkette 4 bis zum Sicherheitssensor 55 und von diesem an die Auswertungseinheit 5 weitergeleitet werden. Die Auswertungseinheit 5 kann die empfangenen Sicherheitssignale auswerten und auf dieser Grundlage bspw. Maßnahmen einleiten, die der Abwendung von Gefährdungen, die von einem unsicheren Betriebszustand der Anlage ausgehen, dienen.

Des Weiteren ist in Figur 8 dargestellt, dass die Sicherheitssignale 111, 112, 121 und 122 Testimpulse 65 enthalten. Diese Testimpulse 65 dienen dazu, einen Querschluss, Kurzschluss, Masseschluss und/oder Erdschluss zu erkennen und auf diese Weise die ordnungsgemäße Funktionalität der Sicherheitssensoren sicherzustellen.

Die Sicherheitssensoren 51, 52, 53, 54, 55 prägen in dem in Figur 8 gezeigten Ausführungsbeispiel den Sicherheitssignalen keine zusätzlichen Daten auf. Für die Auswertungseinheit 5 ist daher nur erkennbar, dass der Sicherheitssensor 55 einen deaktivierten Zustand aufweist. Die Auswertungseinheit 5 ist hingegen nicht in der Lage, zu erkennen, welcher Sicherheitssensor 51, 52, 53, 54, 55, in diesem Beispiel der Sicherheitssensor 53, den unsicheren Betriebszustand der Anlage originär erkannt und damit die Deaktivierung der in Reihe geschalteten Sicherheitssensoren ausgelöst hat. Dies erschwert erheblich die Fehlerdiagnose und erhöht deren Aufwand.

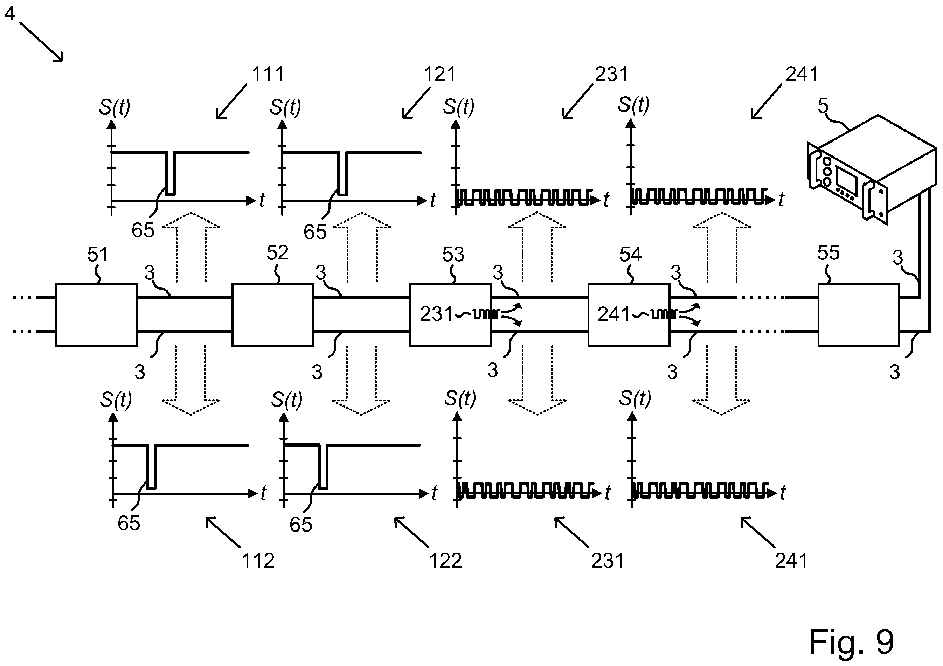

Figur 9 zeigt ein weiteres Ausführungsbeispiel einer Sicherheitssensorenkette 4, deren Aufbau mit dem der zuvor in Figur 8 gezeigten Sicherheitssensorenkette übereinstimmt. Im Umfang der Übereinstimmungen wird zur Vermeidung von Wiederholungen auf die Ausführungen zur Figur 8 verwiesen.

In dem in Figur 9 gezeigten Ausführungsbeispiel hat wiederum der Sicherheitssensor 53 einen unsicheren Betriebszustand der zu überwachenden Anlage erkannt, weist daher einen deaktivierten Sensorzustand auf und gibt an seinen Sicherheitssignals-Ausgängen jeweils ein Ausgangs-Sicherheitssignal 231 aus, das den zweiten Signalzustand aufweist, der einen unsicheren Betriebszustand der Anlage signalisiert.

Darüber hinaus prägt der Sicherheitssensor 53 dem ausgegebenen Ausgangs-Sicherheitssignal 231 zusätzliche Daten auf, indem der Signalwert des Sicherheitssignals in Abhängigkeit der zusätzlichen Daten innerhalb der Grenzen des dem zweiten Signalzustand zugeordneten Wertebereichs verändert wird. Diese zusätzlichen Daten umfassen Diagnosedaten, die eine Kennung Sicherheitssensors, eine Position des Sicherheitssensors, den durch den Sicherheitssensor erkannten Betriebszustand der Anlage und/oder die Art und/oder Ursache des erkannten unsicheren Betriebszustands, im genannten Beispiel eine geöffnete Schutztür, betreffen.

Das Sicherheitssignal 231 mit den aufgeprägten zusätzlichen Daten wird als Eingangs-Sicherheitssignal von dem Sicherheitssensor 241 empfangen. Die Steuerungseinheit des Sicherheitssensors 54 dekodiert aus dem Eingangs-Sicherheitssignal 231 die aufgeprägten zusätzlichen Daten. Darüber hinaus leitet die Steuerungseinheit des Sicherheitssensors 54 diese zusätzlichen Daten weiter, indem sie diese zusätzlichen Daten dem an ihren Sicherheitssignalausgängen ausgegebenen Ausgangs-Sicherheitssignal 241 aufprägt, wobei die zusätzlichen Daten dem Ausgangs-Sicherheitssignal 241 in unveränderter oder veränderter Form aufgeprägt werden können. Auf diese Weise ist es möglich, dass der Sicherheitssensor 54 dem Ausgangs-Sicherheitssignal 241 bspw. eigene Diagnosedaten hinzufügt. In entsprechender Weise werden das Sicherheitssignal und die ihm aufgeprägten zusätzlichen Daten über den Sicherheitssensor 55 weitergeleitet bis zur Auswertungseinheit 5.

Die Auswertungseinheit 5 wertet sowohl das empfangene Sicherheitssignal als auch die mit ihm empfangenen zusätzlichen Daten aus und zeigt sowohl den erkannten Betriebszustand der Anlage als auch die zusätzlichen Daten an. Anhand der aus den zusätzlichen Daten gewonnenen Diagnosedaten ist es der Auswertungseinheit bspw. möglich zu erkennen, dass der Sicherheitssensor 53 den unsicheren Betriebszustand der Anlage originär erkannt hat und somit für die Deaktivierung der ihm ausgangsseitig in Reihe geschalteten Sicherheitssensoren verantwortlich ist. Dadurch wird unmittelbar ersichtlich, dass in dem genannten Beispiel das Öffnen der von dem Sicherheitssensor 53 überwachten Schutztür die Ursache für den erkannten unsicheren Betriebszustand der Anlage ist. Dadurch wird der erfindungsgemäße Vorteil erreicht, dass die Fehlerdiagnose erheblich vereinfacht und beschleunigt wird.

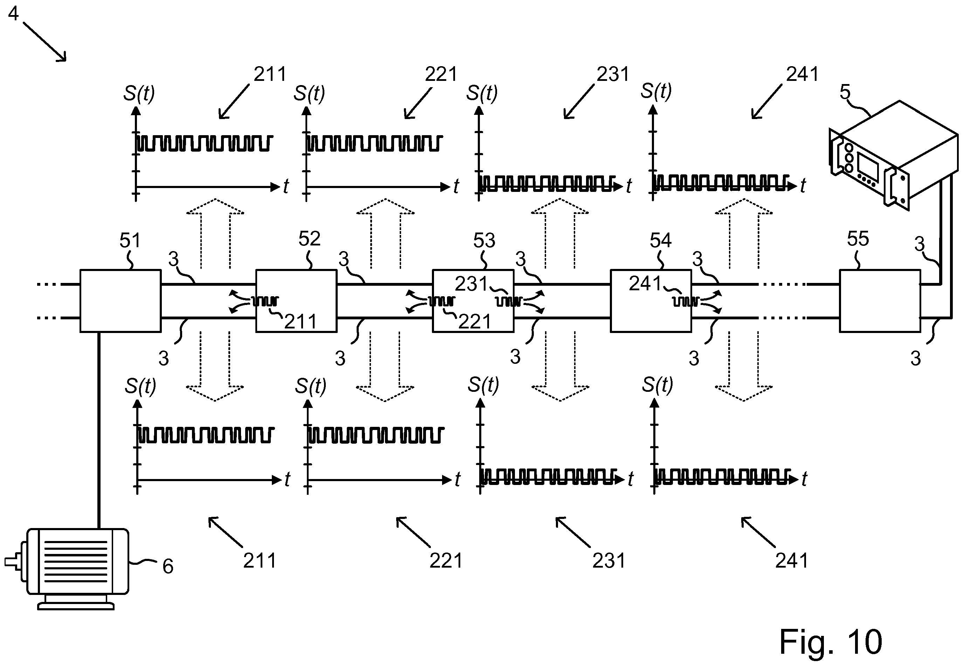

Die Figur 10 zeigt ein weiteres Ausführungsbeispiel einer Sicherheitssensorenkette 4, deren Aufbau im Wesentlichen dem Aufbau der Sicherheitssensorenketten der Figuren 8 und 9 entspricht. Darüber hinaus ist der Sicherheitssensor 51 der in Figur 10 dargestellten Sicherheitssensorenkette verbunden mit einem Aktor 6, der bspw. ein Stellmotor sein kann. Im Umfang der Übereinstimmungen wird zur Vermeidung von Wiederholungen auf die Ausführungen zu den Figuren 8 und 9 verwiesen.

Des Weiteren prägt in dem in Figur 10 dargestellten Ausführungsbeispiel die Steuerungseinheit des Sicherheitssensors 53 dem an den Sicherheitssignaleingängen des Sicherheitssensors 53 empfangenen Eingangs-Sicherheitssignalen 221 zusätzliche Daten auf. Die zusätzlichen Daten werden aufgeprägt, indem in Abhängigkeit der zusätzlichen Daten der Signalwert des empfangenen Eingangs-Sicherheitssignals innerhalb der Grenzen des Wertebereichs verändert wird, der dem im Beispiel vom Sicherheitssensor 53 gegenwärtig empfangenen ersten Signalzustand zugeordnet ist. Diese zusätzlichen Daten umfassen Steuerdaten, die der Parametrierung und/oder Fernsteuerung eines Sicherheitssensors, eines Aktors, einer Auswertungseinheit und/oder einer sonstigen Vorrichtung dienen können.

Aus Sicht des Sicherheitssensors 52, dessen Sicherheitssignalausgänge mit den Sicherheitssignaleingängen des Sicherheitssensors 53 verbunden sind, sind die zusätzlichen Daten somit dem von dem Sicherheitssensor 52 ausgegebenen Ausgangs-Sicherheitssignal 221 aufgeprägt. Die Steuerungseinheit des Sicherheitssensors 52 dekodiert diese zusätzlichen Daten aus dem Ausgangs-Sicherheitssignal. Anhand der in den zusätzlichen Daten enthaltenen Steuerdaten kann nun bspw. der Sicherheitssensor 52 aus der Ferne parametriert oder ferngesteuert werden.

Darüber hinaus leitet die Steuerungseinheit des Sicherheitssensors 52 die zusätzlichen Daten über die Sicherheitssignaleingänge des Sicherheitssensors 52 an den Sicherheitssensor 51 weiter. Dabei kann die Steuerungseinheit des Sicherheitssensors 52 die zusätzlichen Daten in unveränderter Form weiterleiten, oder sie kann die zusätzlichen Daten in veränderter Form weiterleiten und den zusätzlichen Daten bspw. weitere Steuerdaten hinzufügen.

Die Steuerungseinheit des Sicherheitssensors 51 dekodiert wiederum die zusätzlichen Daten aus dem an ihren Sicherheitssignalausgängen anliegenden Ausgangs-Sicherheitssignal 211. Auf diese Weise ist es bspw. möglich, den Aktor 6 fernzusteuern. So können, etwa wenn der Aktor 6 die Funktion eines Stellmotors wahrnimmt, geeignete Maßnahmen getroffen werden, um die Anlage in einen gesicherten Zustand zu überführen und/oder andere Maßnahmen zur Abwendung von Gefährdungen einzuleiten.

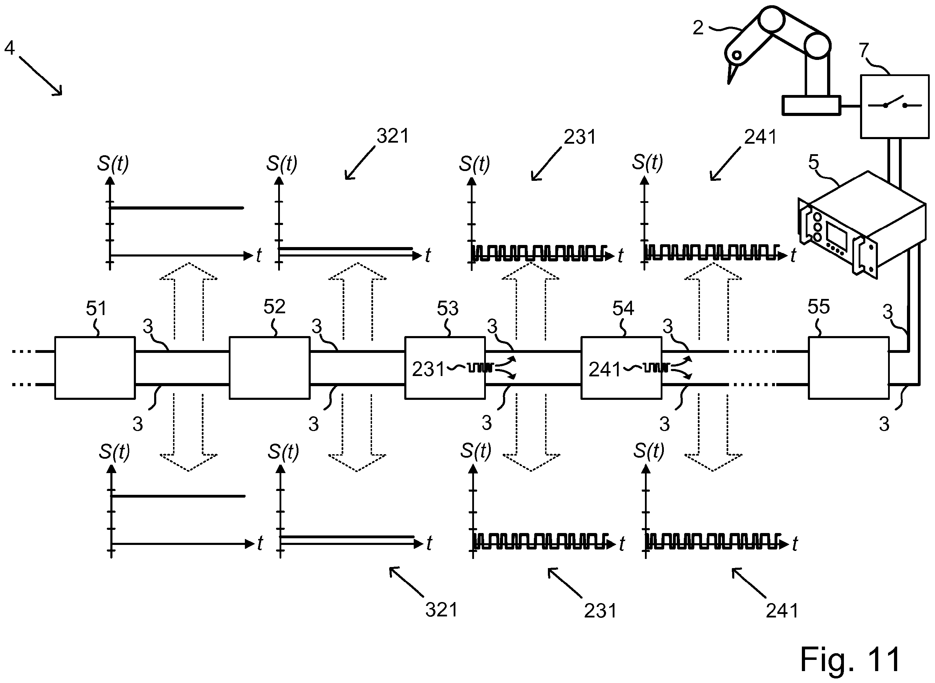

Die Figur 11 zeigt ein weiteres Ausführungsbeispiel einer Sicherheitssensorenkette 4, deren Aufbau weitgehend mit dem Aufbau der Sicherheitssensorenketten aus den vorangegangenen Ausführungsbeispielen übereinstimmt. Im Umfang der Übereinstimmungen wird zur Vermeidung von Wiederholungen auf die Ausführungen zu den Figuren 8 und 9 verwiesen.

Darüber hinaus zeigt das Ausführungsbeispiel der Figur 11 eine Schalteinrichtung 7 der zu überwachenden Anlage 2, die mit der Auswertungseinheit 5 verbunden ist. Erfindungsgemäß ist es ebenso möglich, dass die Schalteinrichtung 7 direkt mit einem oder mehreren Sicherheitssensoren verbunden wird. Die Schalteinrichtung 7 der Anlage 2 ist dazu eingerichtet, die Anlage 2 abzuschalten und/oder die Anlage 2 in einen gesicherten Zustand zu überführen und/oder andere Maßnahmen zur Abwendung von Gefährdungen, die von einem unsicheren Betriebszustand der Anlage 2 ausgehen, einzuleiten.

Erkennt wenigstens einer der Sicherheitssensoren 51, 52, 53, 54, 55 der Sicherheitssensorenkette 4 einen unsicheren Betriebszustand der Anlage und löst dadurch eine Deaktivierung der ihm ausgangsseitig in Reihe geschalteten Sicherheitssensoren aus, so kann vorteilhaft die Anlage 2 mit Hilfe der Schalteinrichtung 7 beispielsweise unmittelbar abgeschaltet und ein Wiedereinschalten verhindert werden, bis sämtliche Sensoren wieder einen aktivierten Sensorzustand eingenommen, d. h. einen sicheren Zustand der Anlage 2 erkannt haben.

In dem in Figur 11 gezeigten Ausführungsbeispiel erkennt bereits der Sicherheitssensor 52 einen unsicheren Betriebszustand der Anlage 2 und nimmt folglich einen deaktivierten Sensorzustand ein. Der Sicherheitssensor 52 kann in diesem Ausführungsbeispiel bspw. ein herkömmlicher Sicherheitssensor sein, der nicht zum Aufprägen zusätzlicher Daten auf das Sicherheitssignal eingerichtet ist. Der Sicherheitssensor 52 gibt daher an seinen Sicherheitssignalausgängen lediglich ein Ausgangs-Sicherheitssignal 321 aus, das den zweiten Signalzustand aufweist und keine aufgeprägten zusätzlichen Daten enthält.

Die Steuerungseinheit des Sicherheitssensors 53 erkennt dadurch, dass an ihren Sicherheitssignaleingängen ein Eingangs-Sicherheitssignal des zweiten Signalzustands empfangen wird, dass ein unsicherer Betriebszustand der Anlage 2 vorliegt und dass dieser unsichere Betriebszustand von einem der mit den Sicherheitssignaleingängen des Sicherheitssensors 53 verbundenen Sicherheitssensoren erkannt worden sein muss. Auf dieser Grundlage kann die Steuerungseinheit des Sicherheitssensors 53 Diagnosedaten erzeugen und den an den Sicherheitssignalausgängen des Sicherheitssensors 53 ausgegebenen Ausgangs-Sicherheitssignalen 231 als zusätzliche Daten aufprägen.

Auf diese Weise lässt sich vorteilhaft z.B. die Position des für die Erkennung des unsicheren Betriebszustands verantwortlichen Sicherheitssensors 52 erheblich eingrenzen und die Diagnose der Fehlerursache entsprechend vereinfachen, wenn der für die Erkennung verantwortliche Sicherheitssensor 52 ein herkömmlicher Sicherheitssensor ist. So wird erfindungsgemäß eine Kompatibilität mit herkömmlichen Sicherheitssensoren dahingehend erreicht, dass der erfindungsgemäße Sicherheitssensor unter weitgehender Ausnutzung seiner Funktionalität zusammen mit einem oder mehreren herkömmlichen Sensoren innerhalb einer Sicherheitssensorenkette 4 eingesetzt werden kann.

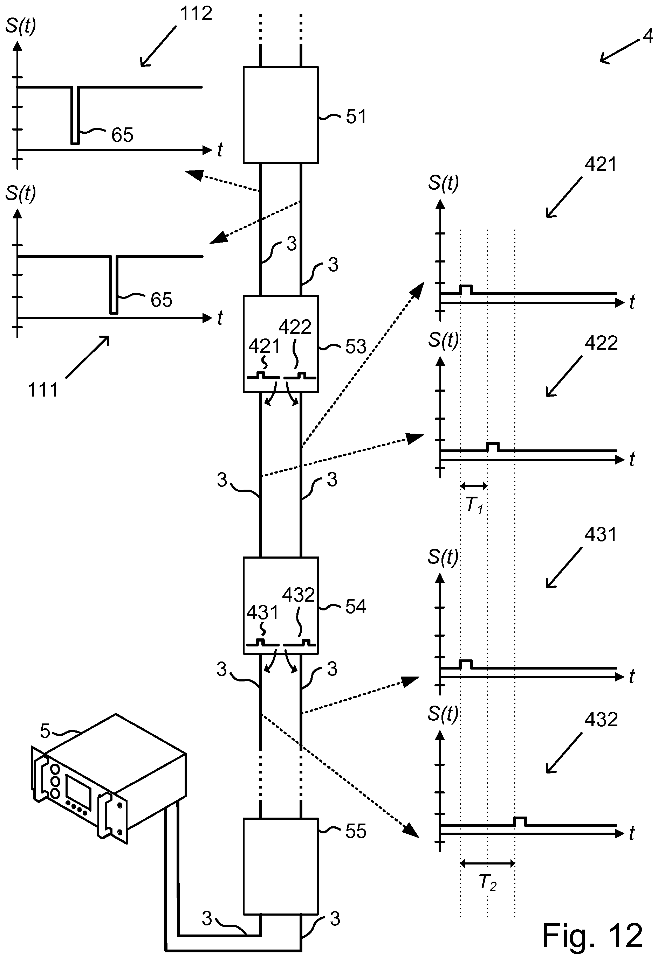

Die Figur 12 zeigt ein weiteres Ausführungsbeispiel einer Sicherheitssensorenkette 4, welche erfindungsgemäße Sicherheitssensoren 51, 52, 53, 54, 55 umfasst, die in der zuvor beschriebenen Weise über Verbindungsleitungen 3 durch Reihenschaltung zu einer Sicherheitssensorenkette kaskadiert worden sind. Der Sicherheitssensor 55 ist auch in diesem Beispiel über Verbindungsleitungen 3 mit einer Auswertungseinheit 5 verbunden. Im Umfang der Übereinstimmungen mit den vorangegangenen Ausführungsbeispielen der Figuren 8 bis 11 wird auf die diesbezüglichen Ausführungen verwiesen.

Der Sicherheitssensor 51 der Figur 12 weist einen aktivierten Sensorzustand auf. Er gibt an seinem ersten Sicherheitssignalausgang ein Ausgangs-Sicherheitssignal 111 und an seinem zweiten Sicherheitssignalausgang ein Ausgangs-Sicherheitssignal 112 aus, wobei beide Ausgangs-Sicherheitssignale den ersten Signalzustand aufweisen, der einen sicheren Betriebszustand der Anlage anzeigt. Die Ausgangs-Sicherheitssignale 111, 112 enthalten darüber hinaus Testimpulse 65 zur Querschluss-, Kurzschluss-, Masseschluss- und/oder Erdschlusserkennung.

Der Sicherheitssensor 53 erkennt im Gegensatz zum Sicherheitssensor 51 einen unsicheren Betriebszustand der Anlage, nimmt daher einen deaktivierten Sensorzustand ein und gibt an seinen Sicherheitssignalausgängen Ausgangs-Sicherheitssignale 421, 422 aus, die jeweils den zweiten Signalzustand aufweisen. Dies führt dazu, dass die dem Sicherheitssensor 53 ausgangsseitig nachgeschalteten Sicherheitssensoren 54 und 55 ebenfalls einen deaktivierten Sensorzustand einnehmen.

Darüber hinaus prägt der Sicherheitssensor 53 dem an seinem ersten Sicherheitssignalausgang ausgegebenen Ausgangs-Sicherheitssignal 421 sowie dem an seinem zweiten Sicherheitssignalausgang ausgegebenen Ausgangs-Sicherheitssignal 422 zusätzliche Daten auf, die Diagnosedaten umfassen. Diese zusätzlichen Daten werden analog zu den zuvor beschriebenen Ausführungsbeispielen entlang der Sicherheitssensorenkette über die Sicherheitssensoren 54 und 55 bis zur Auswertungseinheit 5 weitergeleitet.

Die Besonderheit des in Figur 12 dargestellten Ausführungsbeispiels liegt darin, dass die Sicherheitssensoren zum Aufprägen der zusätzlichen Daten auf das Sicherheitssignal eine besondere Form der Pulsphasenmodulation verwenden. Als zusätzliche Daten werden dabei Diagnosedaten zur Verfügung gestellt, nämlich die Position des Sicherheitssensors 53, der den unsicheren Betriebszustand der Anlage originär erkannt und die Deaktivierung der übrigen deaktivierten Sensoren 54, 55 ausgelöst hat. Zu diesem Zweck prägt der Sicherheitssensor 53 dem ausgegebenen Ausgangs-Sicherheitssignal 421 einen Impuls auf. Dabei wird der Signalwert des Sicherheitssignals lediglich innerhalb der Grenzen des dem zweiten Signalzustand zugeordneten Wertebereichs verändert, d. h. der Impuls wird so bemessen, dass der dem zweiten Signalzustand zugeordnete Wertebereich der elektrischen Spannung von -3 V bis +2 V nicht verlassen wird. Darüber hinaus prägt der Sicherheitssensor 53 dem Ausgangs-Sicherheitssignal 422 einen gleichartigen Impuls auf, der um einen Zeitabstand *T₁* zeitlich zu dem Impuls des Sicherheitssignals 421 versetzt ist.

Der Sicherheitssensor 54 leitet die zusätzlichen Daten in veränderter Form weiter, indem seine Steuerungseinheit die zusätzlichen Daten den an den Sicherheitssignalausgängen des Sicherheitssensors 54 ausgegebenen Ausgangs-Sicherheitssignalen 431, 432 in veränderter Form aufprägt. Dabei wird der Zeitabstand zwischen den den beiden Sicherheitssignalen aufgeprägten Impulsen um einen festgelegten Wert vergrößert, d.h. der dem Ausgangs-Sicherheitssignal 432 aufgeprägte Impuls zusätzlich zum Zeitabstand *T₁* um eine festgelegte Zeiteinheit *Tₓ* verzögert, sodass der Zeitabstand zwischen den beiden den Ausgangs-Sicherheitssignalen aufgeprägten Impulsen nun *T₂* = T₁ + Tₓ beträgt. Dabei gilt *T₂ > T₁.* In einer vorteilhaften Ausführungsform kann zu diesem Zweck Tₓ = T₁ gewählt werden, sodass *T₂* = *2·T₁* gilt.

Auf diese Weise können die dem Sicherheitssignal aufgeprägten zusätzlichen Daten entlang der Sicherheitssensorenkette weitergeleitet werden, wobei jeder der nachfolgenden Sensoren den Impulsen ebenfalls eine festgelegte Zeitverzögerung hinzufügt. Der Zeitabstand zwischen den Impulsen kodiert somit einen Zählerstand, der die ausgehend von der Auswertungseinheit 5 gezählte relative Position des Sicherheitssensors, der den unsicheren Betriebszustand der zu überwachenden Anlage originär erkannt hat, anzeigt. Die Auswertungseinheit 5 kann daher die den Sicherheitssignalen aufgeprägten zusätzlichen Daten einfach dadurch auswerten, dass sie den zeitlichen Abstand zwischen den Impulsen ermittelt und daraus die Position des betroffenen Sicherheitssensors 53 bestimmt. Die Diagnose der Ursache für das Erkennen des unsicheren Betriebszustands der Anlage wird damit erheblich erleichtert und beschleunigt.

Neben beispielhaft zu nennenden Anwendungsgebieten der Fertigungs- und Montagetechnik bietet ein Einsatz des erfindungsgemäßen Sicherheitssensors und/oder einer aus erfindungsgemäßen Sicherheitssensoren gebildeten Sicherheitssensorenkette erhebliche Vorteile in der Aufzugtechnik. Hier können die Schachttüren mit Hilfe erfindungsgemäßer Sicherheitssensoren überwacht werden, wobei jede geöffnete oder nicht richtig geschlossene Schachttür eine sofortige Abschaltung der Fahrtfunktion des Aufzugs auslöst.

Ist nicht bekannt, welcher Sicherheitssensor die Deaktivierung des Sensorzustands ausgelöst hat, muss eine Wartungsperson die Türzustände in jeder Etage überprüfen. Diese manuelle Diagnose kann in Abhängigkeit der Anzahl der Etagen einen hohen Zeitaufwand erfordern und die Personen in der Fahrkönnen.

Durch Einsatz der erfindungsgemäßen Sicherheitssensoren ist eine derart aufwendige manuelle Diagnose nicht notwendig, da die in Reihe geschalteten, kaskadierten Sicherheitssensoren anhand der zusätzlichen Daten (Diagnosedaten), die dem Sicherheitssignal aufgeprägt werden, die Position des für die Deaktivierung verantwortlichen Sicherheitssensors, d.h. desjenigen Sicherheitssensors, der die geöffnete oder nicht richtig geschlossene Schachttür originär erkannt hat, signalisieren. Dies ermöglicht der Wartungsperson, die Störung umgehend in der betroffenen Etage zu beheben.

## Patentansprüche

1. Sicherheitssensor (1, 1a, 1b) zur Überwachung der Betriebssicherheit einer Anlage (2),
a) mit mindestens einem Sicherheitssignaleingang (11,12) zum Empfang eines Eingangs-Sicherheitssignals, das einen ersten Signalzustand (21) oder einen zweiten Signalzustand (22) aufweisen kann,
b) mit mindestens einem Sicherheitssignalausgang (15, 16) zur Ausgabe eines Ausgangs-Sicherheitssignals, das den ersten Signalzustand (21) oder den zweiten Signalzustand (22) aufweisen kann,
c) mit einer Steuerungseinheit (13), die mit dem mindestens einen Sicherheitssignaleingang (11,12) und dem mindestens einen Sicherheitssignalausgang (15, 16) verbunden ist und die dazu eingerichtet ist, einen Betriebszustand der Anlage (2), der ein sicherer oder ein unsicherer Betriebszustand sein kann, zu erkennen und an dem mindestens einen Sicherheitssignalausgang (15, 16) ein Ausgangs-Sicherheitssignal auszugeben, dessen Signalzustand (21, 22) den erkannten Betriebszustand signalisiert,
d) wobei der erste Signalzustand (21) einen sicheren Betriebszustand der Anlage (2) signalisiert und durch einen Signalwert (25) aus einem ersten, dem ersten Signalzustand (21) zugeordneten Wertebereich (23) repräsentiert wird und der zweite Signalzustand (22) einen unsicheren Betriebszustand der Anlage (2) signalisiert und durch einen Signalwert (25) aus einem zweiten, dem zweiten Signalzustand (22) zugeordneten Wertebereich (24) repräsentiert wird, der vom ersten Wertebereich (23) verschieden ist,
**dadurch gekennzeichnet, dass**
e) die Steuerungseinheit (13) dazu eingerichtet ist, dem ausgegebenen Ausgangs-Sicherheitssignal zusätzliche Daten aufzuprägen, indem in Abhängigkeit der zusätzlichen Daten der Signalwert (25) des ausgegebenen Ausgangs-Sicherheitssignals innerhalb der Grenzen des Wertebereichs (23, 24), der dem gegenwärtig ausgegebenen Signalzustand (21, 22) des Ausgangs-Sicherheitssignals zugeordnet ist, verändert wird,
und/oder
f) die Steuerungseinheit (13) dazu eingerichtet ist, dem empfangenen Eingangs-Sicherheitssignal zusätzliche Daten aufzuprägen, indem in Abhängigkeit der zusätzlichen Daten der Signalwert (25) des empfangenen Eingangs-Sicherheitssignals innerhalb der Grenzen des Wertebereichs (23, 24), der dem gegenwärtig empfangenen Signalzustand (21, 22) des Eingangs-Sicherheitssignals zugeordnet ist, verändert wird.

2. Sicherheitssensor (1, 1a, 1b) nach Anspruch 1, **dadurch gekennzeichnet, dass** der mindestens eine Sicherheitssignalausgang (15, 16) mit mindestens einem Sicherheitssignaleingang (11,12) eines anderen Sicherheitssensors (1, 1a, 1b) zur Signalübertragung verbindbar ist und/oder der mindestens eine Sicherheitssignaleingang (11,12) mit mindestens einem Sicherheitssignalausgang (15, 16) eines anderen Sicherheitssensors (1, 1a, 1b) zur Signalübertragung verbindbar ist, um mehrere Sicherheitssensoren (1, 1a, 1b) durch eine Reihenschaltung zu einer Sicherheitssensorenkette (4) zu kaskadieren.

3. Sicherheitssensor (1, 1a, 1b) nach Anspruch 1 oder 2, **dadurch gekennzeichnet, dass** die Steuerungseinheit (13) dazu eingerichtet, dem Eingangs-Sicherheitssignal aufgeprägte zusätzliche Daten aus dem Eingangs-Sicherheitssignal zu dekodieren und/oder dem Ausgangs-Sicherheitssignal aufgeprägte zusätzliche Daten aus dem Ausgangs-Sicherheitssignal zu dekodieren.

4. Sicherheitssensor (1, 1a, 1b) nach einem der vorhergehenden Ansprüche, **dadurch gekennzeichnet, dass** die zusätzlichen Daten Diagnosedaten umfassen, die eine Kennung des Sicherheitssensors (1, 1a, 1b), eine Position des Sicherheitssensors (1, 1a, 1b), den durch den Sicherheitssensor (1, 1a, 1b) erkannten Betriebszustand der Anlage (2), die Art und/oder Ursache eines erkannten unsicheren Betriebszustands und/oder sonstige Diagnoseinformationen betreffen.

5. Sicherheitssensor (1, 1a, 1b) nach einem der vorhergehenden Ansprüche, **dadurch gekennzeichnet, dass** die zusätzlichen Daten Steuerdaten umfassen, die der Parametrierung und/oder der Fernsteuerung eines Sicherheitssensors (1, 1a, 1b), eines Aktors (6), einer Auswertungseinheit (5) und/oder einer sonstigen mit dem Sicherheitssensor (1, 1a, 1b) verbundenen Vorrichtung dienen.

6. Sicherheitssensor (1, 1a, 1b) nach einem der vorhergehenden Ansprüche, **dadurch gekennzeichnet, dass** die Steuerungseinheit (13) dazu eingerichtet ist, zusätzliche Daten weiterzuleiten, indem die Steuerungseinheit (13) dem Eingangs-Sicherheitssignal aufgeprägte zusätzliche Daten in unveränderter oder veränderter Form dem Ausgangs-Sicherheitssignal aufprägt und/oder dem Ausgangs-Sicherheitssignal aufgeprägte zusätzliche Daten in unveränderter oder veränderter Form dem Eingangs-Sicherheitssignal aufprägt.

7. Sicherheitssensor (1, 1a, 1b) nach einem der vorhergehenden Ansprüche, **dadurch gekennzeichnet, dass** die Steuerungseinheit (13) dazu eingerichtet ist, Diagnosedaten in Abhängigkeit des empfangenen Eingangs-Sicherheitssignals und/oder in Abhängigkeit des von der Steuerungseinheit (13) erkannten Betriebszustands der Anlage (2) zu erzeugen und dem Ausgangs-Sicherheitssignal als zusätzliche Daten aufzuprägen.

8. Sicherheitssensor (1, 1a, 1b) nach einem der vorhergehenden Ansprüche, **dadurch gekennzeichnet, dass** die Steuerungseinheit (13) dazu eingerichtet ist, dem ausgegebenen Ausgangs-Sicherheitssignal nur dann zusätzliche Daten aufzuprägen, wenn das Ausgangs-Sicherheitssignal den zweiten Signalzustand (22) aufweist und/oder dem empfangenen Eingangs-Sicherheitssignal nur dann zusätzliche Daten aufzuprägen, wenn das Eingangs-Sicherheitssignal den zweiten Signalzustand (22) aufweist.

9. Sicherheitssensor (1, 1a, 1b) nach einem der vorhergehenden Ansprüche, **dadurch gekennzeichnet, dass** der Sicherheitssensor (1, 1a, 1b) eine Anzeigeeinheit (14) aufweist, die zur optischen und/oder akustischen Anzeige des Betriebszustands der Anlage (2) und/oder der zusätzlichen Daten eingerichtet ist.

10. Sicherheitssensor (1, 1a, 1b) nach einem der vorhergehenden Ansprüche, **dadurch gekennzeichnet, dass** der mindestens eine Sicherheitssignalausgang (15, 16) zur Signalübertragung verbindbar ist mit einer Schalteinrichtung (7) der Anlage (2), die dazu eingerichtet ist, die Anlage abzuschalten und/oder die Anlage (2) in einen gesicherten Zustand zu überführen und/oder andere Maßnahmen zur Abwendung von Gefährdungen, die von einem unsicheren Betriebszustand der Anlage (2) ausgehen, einzuleiten.

11. Sicherheitssensor (1, 1a, 1b) nach einem der vorhergehenden Ansprüche, **dadurch gekennzeichnet, dass** der mindestens eine Sicherheitssignalausgang (15, 16) zur Signalübertragung verbindbar ist mit einer Auswertungseinheit (5), die eingerichtet ist zur Auswertung empfangener Sicherheitssignale und/oder empfangener zusätzlicher Daten und/oder eingerichtet ist zur optischen und/oder akustischen Anzeige des Betriebszustands der Anlage (2) und/oder der zusätzlichen Daten.

12. Sicherheitssensor (1, 1a, 1b) nach einem der vorhergehenden Ansprüche, **dadurch gekennzeichnet, dass** der Signalwert (25) ein auf ein Bezugspotential bezogener Wert einer elektrischen Spannung ist.

13. Sicherheitssensor (1, 1a, 1b) nach Anspruch 12, **dadurch gekennzeichnet, dass** entweder der erste oder der zweite Wertebereich (23, 24) das Bezugspotential, insbesondere ein Bezugspotential von 0 V, umfasst.

14. Sicherheitssensor (1, 1a, 1b) nach Anspruch 12 oder 13, **dadurch gekennzeichnet, dass** der Signalwert (25) in Form einer elektrischen Spannung innerhalb eines Wertebereichs von +11 V bis +30 V für den ersten Signalzustand (21) und innerhalb eines Wertebereichs von -3 V bis +2 V für den zweiten Signalzustand (22) verändert wird.

15. Sicherheitssensor (1, 1a, 1b) nach einem der vorhergehenden Ansprüche, **dadurch gekennzeichnet, dass** die Steuerungseinheit (13) dazu eingerichtet ist, dem ausgegebenen Ausgangs-Sicherheitssignal und/oder dem empfangenen Eingangs-Sicherheitssignal zusätzliche Daten aufzuprägen mit Hilfe eines unipolaren oder bipolaren Leitungscodes, eines AMI-Codes, eines Blockcodes, eines Manchester-Codes, einer Amplitudenumtastung, einer Frequenzumtastung, einer Phasenumtastung, einer Quadraturamplitudenmodulation, einer Pulsamplitudenmodulation, einer Pulsphasenmodulation, einer Pulsfrequenzmodulation und/oder einer Pulsweitenmodulation.

## Claims

1. Safety sensor (1, 1a, 1b) for monitoring the operational safety of a system (2)
a) with at least one safety signal input (11, 12) for receiving an input safety signal which can have a first signal state (21) or a second signal state (22),
b) with at least one safety signal output (15, 16) for transmitting an output safety signal which can have the first signal state (21) or the second signal state (22),
c) with a control unit (13) which is connected to the at least one safety signal input (11, 12) and to the at least one safety signal output (15, 16) and which is configured to detect an operational state of the system (2) which may be a safe or an unsafe operational state and to transmit an output safety signal whose signal state (21, 22) signals the detected operational state on the at least one safety signal output (15, 16),
d) wherein the first signal state (21) signals a safe operational state of the system (2) and is represented by a signal value (25) from a first value range (23) assigned to the first signal state (21), and the second signal state (22) signals an unsafe operational state of the system (2) and is represented by a signal value (25) from a second value range (24) which is assigned to the second signal state (22) and which differs from the first value range (23),
**characterized in that**
e) the control unit (13) is configured to impress additional data on the transmitted output safety signal **in that** the signal value (25) of the transmitted output safety signal is changed within the limits of the value range (23, 24) which is assigned to the presently transmitted signal state (21, 22) of the output safety signal depending on the additional data,
and/or
f) the control unit (13) is configured to impress additional data on the received input safety signal **in that** the signal value (25) of the received input safety signal is changed within the limits of the value range (23, 24) which is assigned to the presently received signal state (21, 22) of the input safety signal depending on the additional data.

2. Safety sensor (1, 1a, 1b) according to Claim 1, **characterized in that** the at least one safety signal output (15, 16) is connectable to at least one safety signal input (11, 12) of a different safety sensor (1, 1a, 1b) for the signal transmission and/or the at least one safety signal input (11, 12) is connectable to at least one safety signal output (15, 16) of a different safety sensor (1, 1a, 1b) for the signal transmission in order to cascade a plurality of safety sensors (1, 1a, 1b) by means of a series circuit to form a safety sensor chain (4).

3. Safety sensor (1, 1a, 1b) according to Claim 1 or 2, **characterized in that** the control unit (13) is configured to decode additional data impressed on the input safety signal from the input safety signal and/or to decode additional data impressed on the output safety signal from the output safety signal.

4. Safety sensor (1, 1a, 1b) according to one of the preceding claims, **characterized in that** the additional data comprise diagnostic data which relate to an identifier of the safety sensor (1, 1a, 1b), a position of the safety sensor (1, 1a, 1b), the operational state of the system (2) detected by the safety sensor (1, 1a, 1b), the type and/or cause of a detected unsafe operational state and/or other diagnostic information.

5. Safety sensor (1, 1a, 1b) according to one of the preceding claims, **characterized in that** the additional data comprise control data which are used for the parameterization and/or the remote control of a safety sensor (1, 1a, 1b), an actuator (6), an evaluation unit (5) and/or other device connected to the safety sensor (1, 1a, 1b).

6. Safety sensor (1, 1a, 1b) according to one of the preceding claims, **characterized in that** the control unit (13) is configured to forward additional data **in that** the control unit (13) impresses additional data impressed on the input safety signal in unchanged form or changed form on the output safety signal and/or impresses additional data impressed on the output safety signal in unchanged or changed form on the input safety signal.

7. Safety sensor (1, 1a, 1b) according to one of the preceding claims, **characterized in that** the control unit (13) is configured to generate diagnostic data depending on the received input safety signal and/or depending on the operational state of the system (2) detected by the control unit (13) and to impress said diagnostic data on the output safety signal as additional data.

8. Safety sensor (1, 1a, 1b) according to one of the preceding claims, **characterized in that** the control unit (13) is configured to impress additional data on the transmitted output safety signal only if the output safety signal has the second signal state (22) and/or to impress additional data on the received input safety signal only if the input safety signal has the second signal state (22).

9. Safety sensor (1, 1a, 1b) according to one of the preceding claims, **characterized in that** the safety sensor (1, 1a, 1b) has an indicator unit (14) which is configured for the visual and/or audible indication of the operational state of the system (2) and/or the additional data.

10. Safety sensor (1, 1a, 1b) according to one of the preceding claims, **characterized in that** the at least one safety signal output (15, 16) is connectable for the signal transmission to a switching device (7) of the system (2) which is configured to deactivate the system and/or transfer the system (2) to a secured state and/or instigate measures to avert risks arising from an unsafe operational state of the system (2) .

11. Safety sensor (1, 1a, 1b) according to one of the preceding claims, **characterized in that** the at least one safety signal output (15, 16) is connectable for the signal transmission to an evaluation unit (5) which is configured to evaluate received safety signals and/or received additional data and/or is configured for the visual and/or audible indication of the operational state of the system (2) and/or the additional data.

12. Safety sensor (1, 1a, 1b) according to one of the preceding claims, **characterized in that** the signal value (25) is an electrical voltage value related to a reference potential.

13. Safety sensor (1, 1a, 1b) according to Claim 12, **characterized in that** either the first or the second value range (23, 24) comprises the reference potential, in particular a reference potential of 0 V.

14. Safety sensor (1, 1a, 1b) according to Claim 12 or 13, **characterized in that** the signal value (25) in the form of an electrical voltage is changed within a value range from +11 V to +30 V for the first signal state (21) and within a value range from -3 V to +2 V for the second signal state (22).

15. Safety sensor (1, 1a, 1b) according to one of the preceding claims, **characterized in that** the control unit (13) is configured to impress additional data on the transmitted output safety signal and/or on the received input safety signal using a unipolar or bipolar line code, an AMI code, a block code, a Manchester code, an amplitude shift keying, a frequency shift keying, a phase shift keying, a quadrature amplitude modulation, a pulse amplitude modulation, a pulse phase modulation, a pulse frequency modulation and/or a pulse width modulation.

## Revendications

1. Capteur de sécurité (1, 1a, 1b) destiné à surveiller la sécurité de fonctionnement d'une installation (2),
a) comprenant au moins une entrée de signal de sécurité (11, 12) pour recevoir un signal de sécurité d'entrée qui peut présenter un premier état de signal (21) ou un second état de signal (22),
b) comprenant au moins une sortie de signal de sécurité (15, 16) pour délivrer un signal de sécurité de sortie qui peut présenter le premier état de signal (21) ou le second état de signal (22),
c) comprenant une unité de commande (13) qui est reliée à ladite au moins une entrée de signal de sécurité (11, 12) et à ladite au moins une sortie de signal de sécurité (15, 16) et qui est conçue pour détecter un état de fonctionnement de l'installation (2), qui peut être un état de fonctionnement sécurisé ou non sécurisé, et pour délivrer en sortie à ladite au moins une sortie de signal de sécurité (15, 16) un signal de sécurité de sortie dont l'état de signal (21, 22) signale l'état de fonctionnement détecté,
d) dans lequel le premier état de signal (21) signale un état de fonctionnement sécurisé de l'installation (2) et est représenté par une valeur de signal (25) se situant dans une première plage de valeurs (23) associée au premier état de signal (21) et le second état de signal (22) signale un état de fonctionnement non sécurisé de l'installation (2) et est représenté par une valeur de signal (25) se situant dans une seconde plage de valeurs (24) associée au second état de signal (22), laquelle seconde plage de valeurs est différente de la première plage de valeurs (23),
**caractérisé en ce que**
e) l'unité de commande (13) est conçue pour appliquer au signal de sécurité de sortie des données supplémentaires en modifiant la valeur de signal (25) du signal de sécurité de sortie dans les limites de la plage de valeurs (23, 24) qui est associée à l'état de signal actuel (21, 22) délivré en sortie du signal de sécurité de sortie en fonction des données supplémentaires,
et/ou
f) l'unité de commande (13) est conçue pour appliquer au signal de sécurité d'entrée reçu des données supplémentaires en modifiant en fonction des données supplémentaires la valeur de signal (25) du signal de sécurité d'entrée reçu dans les limites de la plage de valeurs (23, 24) associée à l'état de signal actuellement reçu (21, 22) du signal de sécurité d'entrée.

2. Capteur de sécurité (1, 1a, 1b) selon la revendication 1, **caractérisé en ce que** ladite au moins une sortie de signal de sécurité (15, 16) peut être reliée à au moins une entrée de signal de sécurité (11, 12) d'un autre capteur de sécurité (1, 1a, 1b) pour la transmission de signaux et/ou ladite au moins une entrée de signal de sécurité (11, 12) peut être reliée à au moins une sortie de signal de sécurité (15, 16) d'un autre capteur de sécurité (1, 1a, 1b) pour la transmission de signaux,
afin de relier en cascade plusieurs capteurs de sécurité (1, 1a, 1b) par une connexion en série conduisant à une chaîne de capteurs de sécurité (4).

3. Capteur de sécurité (1, 1a, 1b) selon la revendication 1 ou 2, **caractérisé en ce que** l'unité de commande (13) est conçue pour décoder des données supplémentaires appliquées au signal de sécurité d'entrée à partir du signal de sécurité d'entrée et/ou pour décoder des données supplémentaires appliquées au signal de sécurité de sortie à partir du signal de sécurité de sortie.

4. Capteur de sécurité (1, 1a, 1b) selon l'une des revendications précédentes, **caractérisé en ce que** les données supplémentaires comprennent des données de diagnostic qui concernent un identificateur du capteur de sécurité (1, 1a, 1b), une position du capteur de sécurité (1, 1a, 1b), l'état de fonctionnement de l'installation (2) détecté par le capteur de sécurité (1, 1a, 1b), le type et/ou la cause d'un état de fonctionnement non sécurisé détecté et/ou toute autre information de diagnostic.

5. Capteur de sécurité (1, 1a, 1b) selon l'une des revendications précédentes, **caractérisé en ce que** les données supplémentaires comprennent des données de commande qui servent à paramétrer et/ou à commander à distance un capteur de sécurité (1, 1a, 1b), un actionneur (6), une unité d'évaluation (5) et/ou un autre dispositif relié au capteur de sécurité (1, 1a, 1b).

6. Capteur de sécurité (1, 1a, 1b) selon l'une des revendications précédentes, **caractérisé en ce que** l'unité de commande (13) est conçue pour transmettre des données supplémentaires en faisant en sorte que l'unité de commande (13) applique au signal de sécurité de sortie des données supplémentaires ayant été appliquées au signal de sécurité d'entrée sous une forme non modifiés ou modifiée et/ou qu'elle applique au signal de sécurité d'entrée des données supplémentaires ayant été appliquées au signal de sécurité de sortie sous une forme non modifiée ou modifiée.

7. Capteur de sécurité (1, 1a, 1b) selon l'une des revendications précédentes, **caractérisé en ce que** l'unité de commande (13) est configurée pour générer des données de diagnostic en fonction du signal de sécurité d'entrée reçu et/ou en fonction de l'état de fonctionnement de l'installation (2) détecté par l'unité de commande (13), et pour les appliquer au signal de sécurité de sortie en tant que données supplémentaires.

8. Capteur de sécurité (1, 1a, 1b) selon l'une des revendications précédentes, **caractérisé en ce que** l'unité de commande (13) est conçue pour n'appliquer des données supplémentaires au signal de sécurité de sortie que lorsque le signal de sécurité de sortie présente le second état de signal (22) et/ou pour n'appliquer des données supplémentaires au signal de sécurité d'entrée reçu que lorsque le signal de sécurité d'entrée présente le second état de signal (22).

9. Capteur de sécurité (1, 1a, 1b) selon l'une des revendications précédentes, **caractérisé en ce que** le capteur de sécurité (1, 1a, 1b) comporte une unité d'affichage (14) qui est conçue pour indiquer optiquement et/ou acoustiquement l'état de fonctionnement de l'installation (2) et/ou les données supplémentaires.

10. Capteur de sécurité (1, 1a, 1b) selon l'une des revendications précédentes, **caractérisé en ce que** ladite au moins une sortie de signal de sécurité (15, 16) peut être reliée à un dispositif de commutation (7) de l'installation (2) pour la transmission de signaux, lequel dispositif de commutation est conçu pour désactiver l'installation et/ou pour faire passer l'installation (2) dans un état sécurisé et/ou pour prendre d'autres mesures afin d'éviter les risques qui résultent d'un état de fonctionnement non sécurisé de l'installation (2).

11. Capteur de sécurité (1, 1a, 1b) selon l'une des revendications précédentes, **caractérisé en ce que** ladite au moins une sortie de signal de sécurité (15, 16) peut être reliée à une unité d'évaluation (5) pour la transmission de signaux, laquelle unité d'évaluation est conçue pour évaluer des signaux de sécurité reçus et/ou des données supplémentaires reçues et/ou est conçue pour indiquer visuellement et/ou acoustiquement l'état de fonctionnement de l'installation (2) et/ou les données supplémentaires.

12. Capteur de sécurité (1, 1a, 1b) selon l'une des revendications précédentes, **caractérisé en ce que** la valeur de signal (25) est une valeur d'une tension électrique rapportée à un potentiel de référence.

13. Capteur de sécurité (1, 1a, 1b) selon la revendication 12, **caractérisé en ce que** la première ou la seconde plage de valeurs (23, 24) comprend le potentiel de référence, en particulier un potentiel de référence de 0V.

14. Capteur de sécurité (1, 1a, 1b) selon la revendication 12 ou 13, **caractérisé en ce que** la valeur de signal (25) est modifiée sous la forme d'une tension électrique se situant dans une plage de valeurs de +11 V à +30 V pour le premier état de signal (21) et de -3 V à +2 V pour le second état de signal (22).

15. Capteur de sécurité (1, 1a, 1b) selon l'une des revendications précédentes, **caractérisé en ce que** l'unité de commande (13) est conçue pour appliquer des données supplémentaires au signal de sécurité de sortie délivré en sortie et/ou au signal de sécurité d'entrée reçu au moyen d'un code de ligne unipolaire ou bipolaire, d'un code AMI, d'un code par blocs, d'un code Manchester, d'une modulation par décalage d'amplitude, d'une modulation par décalage de fréquence, d'une modulation par déphasage, d'une modulation d'amplitude en quadrature, d'une modulation d'amplitude impulsionnelle, d'une modulation de phase impulsionnelle, d'une modulation de fréquence impulsionnelle et/ou d'une modulation d'impulsion en largeur.
